(19) Europäisches Patentamt / European Patent Office / Office européen des brevets

(11) EP 4 261 335 A1

# (12) EUROPEAN PATENT APPLICATION

(43) Date of publication:
**18.10.2023 Bulletin 2023/42**

(21) Application number: **23167292.4**

(22) Date of filing: **11.04.2023**

(51) International Patent Classification (IPC):
***D06F 34/04*** *(2020.01)* ***D06F 34/20*** *(2020.01)*
***D06F 33/47*** *(2020.01)* *D06F 103/02 (2020.01)*
*D06F 103/06 (2020.01)* *D06F 58/50 (2020.01)*
*D06F 34/05 (2020.01)* *D06F 34/14 (2020.01)*
*D06F 34/18 (2020.01)*

(52) Cooperative Patent Classification (CPC):
**D06F 58/50; D06F 33/47; D06F 34/04; D06F 34/20;**
D06F 25/00; D06F 34/05; D06F 34/14; D06F 34/18;
D06F 2103/02; D06F 2103/06; D06F 2103/64;
D06F 2105/58

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.04.2022 US 202217717949**

(71) Applicant: **Infineon Technologies AG**
**85579 Neubiberg (DE)**

(72) Inventors:
- **CHAFEKAR, Saumitra Sanjeev**
  **81737 München (DE)**
- **SANTRA, Avik**
  **Irvine, California 92618 (US)**

(74) Representative: **Sticht, Andreas**
**Kraus & Weisert**
**Patentanwälte PartGmbB**
**Thomas-Wimmer-Ring 15**
**80539 München (DE)**

## (54) LAUNDRY MACHINE, ASSOCIATED SYSTEM AND METHOD

(57) In an embodiment, a method includes: transmitting radar signals; receiving reflected radar signals; transmitting radio-frequency signal (RF) signals with a first antenna site towards a second antenna site, where the first antenna site is disposed at an edge of a loading opening of a laundry machine, and where the second antenna site is disposed opposite to the first antenna site at the edge of the loading opening; receiving propagated RF signals with the second antenna site; determining a presence of a first object at the loading opening based on the reflected radar signals; determining a first property of the first object based on the reflected radar signals, and the propagated RF signals; and determining a first configuration of an operating cycle of the laundry machine based on the first property or alerting a user of the first property before the operating cycle of the laundry machine begins.

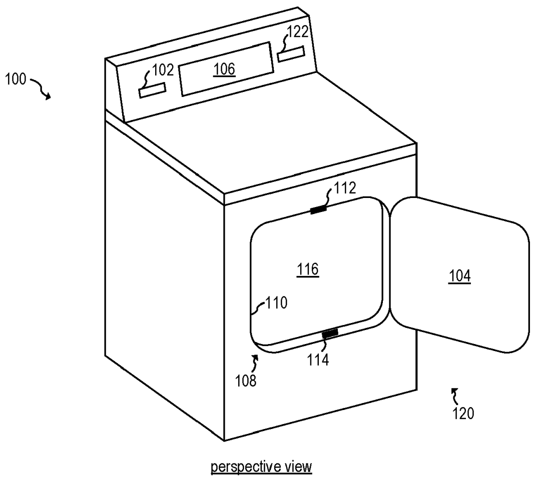


FIG. 1

EP 4 261 335 A1

## Description

### TECHNICAL FIELD

The present disclosure relates generally to an electronic system and method, and, in particular embodiments, to a laundry machine, associated system and method.

### BACKGROUND

A laundry machine (e.g., washer, dryer, or a combined washer and dryer) generally includes a laundry chamber. The laundry chamber generally includes a rotary drum for causing the laundry to tumble during a washing/drying cycle. In some laundry machines, the laundry chamber is accessible from a top side of the laundry machine via a top loading opening, while in other laundry machines, the laundry chamber is accessible from a side (e.g., the front) of the laundry machine via a side loading opening.

A source of wear and tear of laundry and laundry machines is the presence of foreign objects (objects that do not belong to the laundry and that may cause damage to the laundry and laundry machine, e.g., during the operating cycle of the laundry machine) in the laundry during a washing/drying cycle. Typical examples of foreign objects include keys, coins, hard plastic, paper, belt buckles, etc., which may be forgotten to be taken off the laundry before loading the laundry machine.

Another source of wear and tear of laundry and laundry machines is the detachment of native objects (objects that belong to the laundry, but that may detach from the laundry and cause damage to the laundry and laundry machine, e.g., during the operating cycle of the laundry machine) from the laundry. Typical examples of native objects include buttons, zips, hooks, straps, etc., which may come off or separate from clothes during washing.

Damage to clothes (e.g., fabric pilling or lint formation) may occur due to aggressive washing cycles (reflecting high friction) and high temperature without taking into account the type of fabric (e.g., woolen, synthetic, mixed, natural etc.). In such situations, the fibers of clothes may get loose, tangle, break and pile altogether, which may be harmful to clothes and/or the laundry machine. Generally, already pilled fabric surfaces tend to spread lint to other clothes, which may be harmful to machine parts when released excessively during a washing cycle.

Different fabrics may react differently to washing agents (e.g., detergent, softener, etc.), which may eventually lead to abrasion of clothes if a washing cycle is provided with inappropriate dosage or type of such agents. Natural fabrics (e.g., cotton, wool, silk and linen) may each have a distinct care requirement. Synthetic fabrics may be sensitive to heat and oil.

Damage to laundry may also occur based on the surface character of the clothes, like texture implying roughness/smoothness, coarse/fine pores, pre-pilled surfaces of clothes etc. For example, it may be better to wash denim materials separately as they are generally quite coarse. This may help save lighter fabrics from the friction of rubbing against heavier ones. For a similar reason, it may be beneficial to unzip and button clothes before tossing the clothe in a washing machine. Turning jeans, printed clothes and shirts inside out while loading the clothes into the washing machine may be beneficial as it may limit any abrasion to the inner layers of the clothes.

### SUMMARY

A method as defined in claim 1, a laundry machine as defined in claim 14 and a system as defined in claim 15 are provided. The dependent claims define further embodiments. The laundry machine and the system may be configured to perform any one of the methods defined in claims 1 to 13.

In accordance with an embodiment, a method includes: transmitting radar signals; receiving reflected radar signals; transmitting radio-frequency signal (RF) signals with a first antenna site towards a second antenna site, where the first antenna site is disposed at an edge of a loading opening of a laundry machine, and where the second antenna site is disposed opposite to the first antenna site at the edge of the loading opening; receiving propagated RF signals with the second antenna site; determining a presence of a first object at the loading opening based on the reflected radar signals; determining a first property of the first object based on the reflected radar signals, and the propagated RF signals; and determining a first configuration of an operating cycle of the laundry machine based on the first property or alerting a user of the first property before the operating cycle of the laundry machine begins.

In accordance with an embodiment, a method includes: transmitting radar signals; receiving reflected radar signals; transmitting radio-frequency signal (RF) signals with a first antenna site towards a second antenna site, where the first antenna site is disposed at an edge of a loading opening of a laundry machine, and where the second antenna site is disposed opposite to the first antenna site at the edge of the loading opening; receiving propagated RF signals with the second antenna site; generating a standing wave at the loading opening; and estimating a first standing wave value indicative of a disruption of the standing wave determining a presence of a first object at the loading opening based on the reflected radar signals; determining a first property of the first object based on the propagated RF signals and the first standing wave value; and determining a first configuration of an operating cycle of the laundry machine based on the first property or alerting a user of the first property before the operating cycle of the laundry machine begins.

In accordance with an embodiment, a laundry machine includes: a laundry chamber having a loading opening; a first antenna site including a first transmitting antenna and a first receiving antenna; a second antenna site including a second transmitting antenna and a second receiving antenna, where the first and second antenna sites are disposed opposite to each other at an edge of the loading opening; a millimeter-wave radar sensor configured to transmit radar signals using the first transmitting antenna and receive reflected radar signals using the second transmitting antenna; a standing wave analyzer configured to generate a standing wave at the loading opening using the first and second antenna sites and estimate a first standing wave value indicative of a disruption of the standing wave; and a processing system configured to: determine a presence of a first object at the loading opening based on the reflected radar signals, determine a first property of the first object based on the reflected radar signals and the first standing wave value, and determine a first configuration of an operating cycle of the laundry machine based on the first property or alert a user of the first property before the operating cycle of the laundry machine begins.

In accordance with an embodiment, a system includes: a first antenna site; a second antenna site, where the first and second antenna sites are disposed opposite to each other at an edge of an opening; a millimeter-wave radar sensor configured to transmit radar signals using the first antenna site and receive reflected radar signals using the second antenna site; an energy spectrum sensor configured to transmit radio-frequency signal (RF) signals with the first antenna site towards the second antenna site, and receive propagated RF signals with the second antenna site; a standing wave analyzer configured to generate a standing wave at a loading opening using the first and second antenna sites and estimate a first standing wave value indicative of a disruption of the standing wave; and a processing system configured to: determine a presence of a first object at the opening based on the reflected radar signals, determine a first property of the first object based on the reflected radar signals, the propagated RF signals, and the first standing wave value, and alert a user of the first property.

## BRIEF DESCRIPTION OF THE DRAWINGS

For a more complete understanding of the present invention, and the advantages thereof, reference is now made to the following descriptions taken in conjunction with the accompanying drawings, in which:

Figure 1 shows a perspective view of a laundry machine, according to an embodiment of the present invention;

Figure 2 shows a flow chart of an embodiment method for operating a laundry machine, according to an embodiment of the present invention;

Figure 3 shows a block diagram of a detection and control system, according to an embodiment of the present invention;

Figure 4 shows a flow chart of an embodiment method for monitoring laundry as the laundry is being loaded into a laundry chamber, according to an embodiment of the present invention;

Figure 5 shows a front view of the loading opening of Figure 1, according to an embodiment of the present invention;

Figure 6 shows a flow chart of an embodiment method for monitoring laundry during an operating cycle of a laundry machine, according to an embodiment of the present invention;

Figure 7 illustrates a block diagram of an embodiment method for generating radar images using the millimeter-wave radar sensor of Figure 3, according to an embodiment of the present invention;

Figure 8 illustrates a block diagram of an embodiment method for generating energy spectrums using the energy spectrum sensor of Figure 3, according to an embodiment of the present invention;

Figure 9 illustrates a block diagram of an embodiment method for generating a value indicative of a standing wave disruption using the standing waveform analyzer of Figure 3, according to an embodiment of the present invention;

Figures 10 and 11 show block diagrams of neural networks, according to embodiments of the present invention;

Figure 12 shows a block diagram showing an embedding process flow, according to an embodiment of the present invention; and

Figure 13 shows a schematic diagram of a possible implementation of the millimeter-wave radar sensor of Figure 3, according to an embodiment of the present invention.

Corresponding numerals and symbols in different figures generally refer to corresponding parts unless otherwise indicated. The figures are drawn to clearly illustrate the relevant aspects of the preferred embodiments and are not necessarily drawn to scale.

## DETAILED DESCRIPTION OF ILLUSTRATIVE EMBODIMENTS

The making and using of the embodiments disclosed are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The description below illustrates the various specific details to provide an in-depth understanding of several example embodiments according to the description. The embodiments may be obtained without one or more of the specific details, or with other methods, components, materials and the like. In other cases, known structures, materials or operations are not shown or described in detail so as not to obscure the different aspects of the embodiments. References to "an embodiment" in this description indicate that a particular configuration, structure or feature described in relation to the embodiment is included in at least one embodiment. Consequently, phrases such as "in one embodiment" that may appear at different points of the present description do not necessarily refer exactly to the same embodiment. Furthermore, specific formations, structures or features may be combined in any appropriate manner in one or more embodiments.

Embodiments of the present invention will be described in specific contexts, e.g., a laundry machine capable of detecting one or more properties of laundry using sensor fusion (e.g., radar, standing wave sensor, energy spectrum sensor), aided by artificial intelligence, and configuring an operating cycle of the laundry machine based on such detection. Some embodiments may be used in other applications such as applications that may benefit from material/object classification/detection. Some embodiments may use a different combination of sensors (e.g., including ultrasonic sensors, and vision sensors) for the sensor fusion.

In an embodiment of the present invention, a pair of antenna sites disposed at opposite ends of an edge (perimeter) of a loading opening of a laundry machine are used for transmitting and receiving millimeter-wave chirps and radio-frequency (RF) signals (e.g., with amplitude-shift keying (ASK), frequency-shift keying (FSK), or phase-shift keying (PSK) modulation), and for generating standing waves at the loading opening. Data based on the received millimeter-wave chirps, the received RF signals and/or properties of the standing waves, are used for determining one or more properties of laundry as the laundry moves through the loading opening and into a laundry chamber of the laundry machine. A controller then configures an operating cycle of the laundry machine based on the determined one or more properties of the laundry inside the laundry chamber and/or alerts a user of the one or more properties of the laundry inside the laundry chamber. In some embodiments, the controller provides, based on the determined one or more properties of the laundry inside the laundry chamber, early notification (e.g., a notification before the operating cycle of the laundry machine begins) to a user of the presence of a (e.g., foreign) object that could be harmful to the laundry and/or laundry machine so that the object is removed from the laundry machine before starting the washing/drying cycles.

Figure 1 shows a perspective view of laundry machine 100, according to an embodiment of the present invention. Laundry machine 100 includes door 104, loading opening 108, laundry chamber 116, control and display module 106, sensing and control circuit 102, main laundry machine controller 122, and antenna sites 112 and 114. Sensing and control circuit 102, in cooperation with antenna sites 112 and 114, forms detection and control system 120.

In some embodiments, laundry machine 100 may be implemented as a washer, as dryer, or as a combination of a washer and dryer, for example. In some embodiments, such as shown in Figure 1, laundry machine 100 may be implemented as a front-loading laundry machine. In other embodiments, laundry machine 100 may be implemented as a top-loading laundry machine.

In some embodiments, laundry chamber 116 is chamber inside laundry machine 100 for receiving laundry. In some embodiments, laundry chamber 116 includes a rotary drum (not shown) for causing the laundry to tumble during a washing/drying cycle. Other implementations are also possible.

In some embodiments, loading opening 108 is an opening through which laundry travels from outside laundry machine 100 and into laundry chamber 116. In some embodiments, such as shown in Figure 1, loading opening 108 is implemented with a square shape with rounded corners. Other implementations, such as a round loading opening, may also be used.

In some embodiments, control and display module 106 is configured to allow a user to control settings of laundry machine 100 and to display information of laundry and/or laundry machine 100. In some embodiments, control and display module 106 includes a touchscreen for control and display of information. In some embodiments, control and display module 106 includes knobs, buttons, and/or a microphone for control, and/or a screen, projector and/or speaker for displaying/playing information. Other implementations are also possible.

In some embodiments, door 104 is configured, when open, to allow laundry to be placed inside laundry chamber 116, and, when closed, to prevent solid, liquid, and gasses from exiting laundry chamber 116 via loading opening 108.

In some embodiments, detection and control system 120 is configured to detect one or more properties of objects (e.g., laundry) as the objects travel through loading opening 108. Detection and control system 120 includes first and second antenna sites 112 and 114, and sensing and control circuit 102.

As shown in Figure 1, in some embodiments, the first and second antenna sites 112 and 114 are disposed opposite to each other at edge 110 of loading opening 108. In some embodiments, detection and control system 120 may include more than two antenna sites. For example, in some embodiments, two pairs of antenna sites may be disposed at edge 110. For example, in some embodiments, in addition to antenna sites 112 and 114, a third and fourth antenna sites (not shown) may be disposed opposite to each other along the vertical sides of edge 110. Other implementations are also possible.

Antenna sites 112 and 114 are configured to transmit and receive signals towards each other and through loading opening 108. Each of antenna sites 112 and 114 may include a plurality of antennas (e.g., an array of antennas), which may be selectively controlled to transmit signals with different frequencies/shapes and/or for performing functions such as beamforming. In some embodiments, each of antenna sites 112 and 114 includes control circuitry (e.g., multiplexers, amplifiers, filters, analog-to-digital converters, etc.) for controlling the plurality of antennas and/or for controlling/processing the signals transmitted/received by the plurality of antennas.

In some embodiments, sensing and control circuit 102 is configured to cause signals to be transmitted by antenna sites 112 and 114 and receive data/signals from antenna sites 112 and 114 and determine one or more properties of the laundry/foreign objects based on such received data/signals. In some embodiments, sensing and control circuit 102 is configured to cause information about the one or more properties of the laundry/foreign objects to be displayed, e.g., in control and display module 106, and/or in a mobile device.

In some embodiments, sensing and control circuit 102 includes a millimeter-wave radar sensor, a standing wave analyzer, and an energy measurement sensor. In some embodiments, the millimeter-wave radar sensor, the standing wave analyzer, and the energy measurement sensor share the antenna sites (112, 114) to transmit/receive their respective signals (e.g., simultaneously or in a round robin manner). In some embodiments, each of the millimeter-wave radar sensor, the standing wave analyzer, and the energy measurement sensor is implemented with respective and independent antenna sites (e.g., disposed at edge 110).

In some embodiments, sensing and control circuit 102 may be implemented, e.g., in a printed circuit board (PCB) inside laundry machine 100. In some embodiments, sensing and control circuit 102 is implemented in a distributed manner inside laundry machine 100. For example, in some embodiments, portions of sensing and control circuit 102 are implemented inside antenna sites 112 and/or 114. In some embodiments, sensing and control circuit 102 may be implemented, at least partially, in a remote server. Other implementations are also possible.

In some embodiments, main laundry machine controller 122 is configured to control the operating cycle of the laundry machine and is configured to receive data from one or more sensors of laundry machine 100, and control one or more sensors of laundry machine 100. For example, in some embodiments, main laundry controller 122 is configured to receive a signal from a door sensor (not shown) indicative of whether door 104 is open or closed. In some embodiments, main laundry controller 122 is configured to receive configuration data from control and display 106, and to cause control and display 106 to display information. For example, in some embodiments, main laundry controller 122 may receive data from control circuit 102 and cause control and display 106 to display such data.

In some embodiments, main laundry controller 122 may be implemented as a generic or custom processor or controller coupled to a memory and configured to execute instructions stored in such memory. In some embodiments, main laundry controller 122 and sensing and control circuit 102 may be implemented together (e.g., by sharing a processor, for example). Other implementations are also possible.

Figure 2 shows a flow chart of embodiment method 200 for operating laundry machine 100, according to an embodiment of the present invention. Figure 2 may be understood in view of Figure 1.

During step 202, door 204 is opened. In some embodiments, the opening of door 2004 activates (e.g., wakes-up) detection and control circuit 120 so that detection and control circuit 120 begins monitoring loading opening 108 for laundry/foreign objects.

During step 204 and before laundry machine 100 begins an operating cycle, laundry is loaded from outside laundry machine 100 and into laundry chamber 116. During the loading of laundry from outside laundry machine 100 into laundry chamber 116, laundry travels, e.g., piece by piece, or in groups, through loading opening 108. As laundry travels through loading opening 108 and into loading chamber 116, detection and control system 120 detects one or more properties of the laundry and/or other objects traveling through loading opening 108. Examples of the properties that detection and control system 120 may detect of the laundry and or other objects includes: whether the clothe is printed or not (e.g., yes or no), whether the clothe is woven (e.g., tightly, medium, loosely), whether the clothe has potential for lint release (e.g., yes, no, maybe), whether the clothe has an abrasive native object (e.g., present, absent), whether the clothe/object is or has hidden a foreign object (e.g., yes, no, potentially), whether the clothe/object is dry or wet, the shade of the clothe (e.g., dark or white), and/or the level of dirt of the clothe (e.g., high, medium, low).

In some embodiments, detection and control system 120 determines during step 204 a direction of movement (e.g., a velocity) of the laundry/foreign objects traveling through loading opening 108, and determines whether the laundry/foreign objects is being inserted into laundry chamber 116 or removed from laundry chamber 116 based on such direction of movement. In some embodiments, detection and control system 120 keeps track of the laundry/foreign objects inside laundry chamber 116.

In some embodiments, if during step 204 (e.g., while door 104 remains open) detection and control circuit 120 detects the presence of a foreign object, then detection and control circuit 120 alerts a user of the presence of such foreign object during step 208. In some embodiments, abrasion of clothes may be avoided by early estimating the presence of foreign objects that could be harmful to the laundry and/or laundry machine and notifying a user of such presence so that the foreign object is removed from the laundry machine before starting the washing/drying cycles.

In some embodiments, detection and control circuit 120 alerts the user via control and display module 106. In some embodiments, detection and control circuit 120 alerts the user via a mobile device (e.g., by communicating with the mobile device via Bluetooth, WiFi, and/or via the Internet). In some embodiments, the user may be alerted in other ways, such as by using a buzzer, colored light, or vocal warnings, for example.

In some embodiments, detection and control circuit 120 also detects the presence of native objects at risk of detachment during step 206. In some embodiments, abrasion of clothes may be avoided by early estimating the presence of native objects that could detached and be harmful to the laundry and/or laundry machine, and notifying a user of such presence so that the laundry having the native object is removed from the laundry machine before starting the washing/drying cycles.

As shown in Figure 2, step 204 (and, e.g., 206 and 208) is performed until door 104 is closed during step 210. After finishing loading the laundry into chamber 116 (e.g., after step 210), step 212 is performed.

In some embodiments, during step 212, detection and control system 120 determines an operating cycle of laundry machine 100 based on the determined one or more properties of the laundry inside laundry chamber 116. Example parameters of the operating cycle controlled by detection and control system 120 include: rotational speed of a rotary drum of laundry chamber 116, frequency of change of direction of rotation of the rotary drum, temperature of laundry chamber 116, amount of water/moist to be used during the operating cycle, duration of the operating cycle, duration and number of times of a rinse cycle, amount and time at which solutions (e.g., detergent, softener, bleach, etc.) are dispensed into laundry chamber 116, and/or duration of a pre-soaking cycle.

In some embodiments, during step 214, detection and control system 120 alerts a user of one or more properties of the clothe/object loaded into laundry chamber 116. Steps 212 and 214 may be performed simultaneously, or sequentially (e.g., step 212 before or after step 214). For example, in some embodiments, step 214 may be displaced simultaneously with step 204. Other implementations are also possible.

In some embodiments, the user alerted during steps 204 and/or 214 is a human, e.g., that is operating laundry machine 100. In some embodiments, the user alerted during steps 204 and/or 214 is not human, such as a microcontroller or a robot.

During step 216, laundry machine 100 begins the operating cycle, e.g., in accordance with the settings determined during step 212.

Figure 3 shows a block diagram of detection and control system 300, according to an embodiment of the present invention. Detection and control system 300 includes antenna sites 312 and 314, and sensing and control system 302. Sensing and control circuit 302 includes millimeter-wave radar sensor 306, standing wave analyzer 308, energy spectrum sensor 310, and processing system 304. Antenna site 312 includes transmitting antennas 316, receiving antennas 318, and control circuit 320. Antenna site 314 includes transmitting antennas 322, receiving antennas 324, and control circuit 326. Detection and control system 120 may be implemented as detection and control system 300. Antenna sites 112 and 114 may be implemented as antenna sites 312 and 314, respectively.

As shown in Figure 3, antenna sites 312 and 314 are disposed at opposite ends of loading opening 108. For example, in some embodiments, the (e.g., center of the) field-of-view (FoV) of transmitting antennas 316 is aligned with (e.g., directed towards) receiving antennas 324; the (e.g., center of the) FoV of transmitting antennas 322 is aligned with (e.g., directed towards) receiving antennas 318; the (e.g., center of the) FoV of receiving antennas 318 is aligned with (e.g., directed towards) transmitting antennas 322; and the (e.g., center of the) FoV of receiving antennas 324 is aligned with (e.g., directed towards) receiving antennas 316.

In some embodiments, the antennas (316,318,322,324) may be implemented as directional, flatbed, printed or flexible antennas. In some embodiments, the antennas of an antenna site may be of different types. For example, in some embodiments, transmitting antennas 316 include a plurality of antennas of the directional, flatbed, and printed type; receiving antennas 318 include a plurality of antennas of the directional, flatbed, and printed type; transmitting antennas 322 include a plurality of antennas of the directional, flatbed, and printed type; and receiving antennas 324 include a plurality of antennas of the directional, flatbed, and printed type. Other implementations are also possible.

In some embodiments, control circuits 320 and 326 may include synchronization circuits (e.g., to assist in synchronizing signals, e.g., for operation of millimeter-wave radar sensor 306 and/or standing wave analyzer 308), selection circuits (e.g., for selecting a subset of antennas for transmitting/receiving signals), and/or analog front end (AFE) to assist in the reception and transmission of signals (e.g., for millimeter-wave radar sensor 306, standing wave analyzer 308, and/or energy spectrum sensor 310).

In some embodiments, millimeter-wave radar sensor 306 is configured to transmit (e.g., via transmitting antenna(s) 316) radar signals (e.g., chirps) towards loading opening 108 and receive associated reflected radar signals (e.g., via receiving antenna(s) 318) from object(s) in loading opening 108. Data associated with the reflected radar signals is then processed by processing system 304 for, e.g., generating one or more radar image capturing the object(s) traveling through loading opening 108. For example, in some embodiments, processing system 304 generates one or more range-angle images (RAIs), and/or range-Doppler images (RDIs) based on the reflected radar signals. In some embodiments, processing system 304 detects one or more properties of the object(s) traveling through loading opening 108, such as position, velocity, and/or a property of the material of the object(s) based on the radar images associated with the reflected radar signals.

In some embodiments, millimeter-wave radar sensor 306 is configured to transmit and receive the radar signals via another transmitting/receiving antenna(s), such as transmitting/receiving antenna(s) 322 and 324 or via another transmitting/receiving antenna(s) (not shown). In some embodiments, millimeter-wave radar sensor 306 may be implemented in any way known in the art.

Energy spectrum sensor 310 is configured to transmit (e.g., via transmitting antenna(s) 316) radio-frequency (RF) signals (e.g., using signal modulations such as ASK, FSK or PSK) towards loading opening 108 and receive associated reflected RF signals (e.g., via receiving antenna(s) 318) and/or associated propagated RF signals (e.g., via receiving antenna(s) 324). Data associated with the reflected RF signals and/or the propagated RF signals is/are then processed by processing system 304 for, e.g., generating a measured energy spectrum. For example, in some embodiment, RF signals at different frequencies are transmitted with transmitting antenna(s) 316 and associated reflected RF signals are received by receiving antenna(s) 318. The reflected RF signals are compared with the transmitted RF signals (e.g., using a 2D correlation operation) to determine the change (e.g., in amplitude, frequency, and/or phase) between the transmitted and reflected signals. Such determined difference may be captured per frequency bin in an energy spectrum. In some embodiment, propagated RF signals are associated with the transmitted RF signals are received by receiving antenna(s) 324. The propagated RF signals are compared with a reconstructed transmitted RF signals (e.g., using a 2D correlation operation) to determine the change (e.g., in amplitude, frequency, and/or phase) between the transmitted and reflected signals. Such determined difference may be captured per frequency bin in an energy spectrum.

In some embodiments, energy spectrum sensor 310 includes a (e.g., conventional) transmitter for generating the RF signals, a (e.g., conventional) receiver for receiving the reflected RF signals, and an ADC for digitizing the reflected RF signals. Other implementations are also possible.

In some embodiments, standing wave analyzer 308 is configured to transmit, e.g., a single tone RF signal using transmitting antennas 316 and 318 so as to cause a standing wave between transmitting antennas 316 and 318 and through loading opening 108. Energy spectrum sensor 308 is also configured to monitor properties (e.g., amplitude, frequency and/or phase) of the generated standing wave. As objects travel through loading opening 108, properties of the generated standing wave may (e.g., temporarily) change. Such changes (e.g., in amplitude, frequency and/or phase) are used to generate one or more values (e.g., a difference between original standing wave amplitude/frequency/phase and disrupted standing wave amplitude/frequency/phase) indicative of the disruption of the standing wave.

In some embodiments, standing wave analyzer 308 includes a (e.g., conventional) transmitter for generating the single tone RF signals, a (e.g., conventional) receiver for receiving the single tone reflected/propagated RF signals, and an ADC for digitizing the received single tone RF signals. Other implementations are also possible.

In some embodiments, processing system 304 is configured to perform some or all of the signal processing for millimeter-wave radar sensor 306, standing wave analyzer 308 and/or energy spectrum sensor 310.

In some embodiments, processing system 304 is configured to determine (e.g., during step 204) one or more properties of the laundry/foreign objects traveling through loading opening 108 based on the radar image(s) received from millimeter-wave radar sensor 306, the energy spectrum(s) received from energy spectrum sensor 310, and/or the one or more values indicative of the disruption of the standing wave received from standing wave analyzer 306. For example, in some embodiments, the surface character of clothes may be determined based on a RAI from millimeter-wave radar sensor 306, an energy spectrum from energy spectrum sensor 310, and a value indicative of a disruption of a standing wave from standing wave analyzer 308. In some embodiments, determining the surface character of clothes may advantageously allow for estimating the level of dirt and pre moist conditions of the clothes. In some embodiments, such information may advantageously allow for optimizing the washing cycle to impart appropriate friction (e.g., by controlling rotational speed of the rotary drum, controlling the frequency of rotation direction change of the rotary drum, etc.), appropriate drying/washing temperatures, appropriate number of rinsing cycles and rinse time, appropriate duration of the drying/washing cycle, and appropriate amount of the detergents. In some embodiments, determining the surface character of clothes may advantageously further allow to estimate the amount of laundry and associated space such laundry would occupy in the chamber 116, and the washing cycle may be optimized based on such information. In some embodiments, pre moisture levels may be advantageously uses to determine whether to use a heavy mid or low load cycle to optimize the washing cycle..

In some embodiments, combining outputs of sensors 306, 308 and 310 may advantageously for the accurate estimation of an object (e.g., a foreign object, such as a coin, keys, etc.), such as when such object is hidden inside cloth (e.g., inside a pocket of pants), as well as increasing the resolution (e.g., multifold) in estimating the surface characteristic of clothes.

In some embodiments, abrasion of clothes may be avoided by notifying and guiding a user (e.g., via control and display module 106 and/or via an app in a mobile device) to segregate the laundry articles based on the type and surface character (e.g., texture) of the fabric and optimizing the washing/drying parameters, such as temperature, washing loads, detergent dosage, etc.

In some embodiments, processing system 304 is configured to determine an operating cycle (e.g., during step 212) of laundry machine 100 based on the determined one or more properties of the loaded laundry. In some embodiments, processing system 304 configures the settings of laundry machine 100 by sending commands to main laundry controller 122.

In some embodiments, processing system 304 is configured to alert a user (e.g., during step 208 and/or 214) of the presence of a foreign object and/or of the property of the laundry/foreign object, e.g., by sending commands to main laundry controller 122 to cause the information to be displayed/reproduced by control and display module 106.

In some embodiments, processing system 304 may be implemented with a general purpose processor, controller or digital signal processor (DSP) that includes, for example, combinatorial circuits coupled to a memory. In some embodiments, processing system 104 may be implemented as an application specific integrated circuit (ASIC). In some embodiments, processing system 304 may be implemented with an ARM, RISC, or x86 architecture, for example. In some embodiments, processing system 304 may include an artificial intelligence (AI) accelerator. Some embodiments may use a combination of hardware accelerator and software running on a DSP or general purpose microcontroller to implement processing system 304. Other implementations are also possible.

In some embodiments, part of processing system 304 may be implemented by control circuits 320 and/or 326. For example, in some embodiments, control circuit 320 may implement millimeter-wave radar sensor 306 and a portion of processing system 304. For example, in some embodiments, control circuit 320 may generate radar images (e.g., RAI). Other implementations are also possible.

Figure 4 shows a flow chart of embodiment method 400 for monitoring laundry as the laundry is being loaded into laundry chamber 116, according to an embodiment of the present invention. Step 204 may be implemented as method 400. Figure 4 may be understood in view of Figure 3.

During step 402, millimeter-wave radar sensor 306 transmits radar signals (e.g., chirps), e.g., via transmitting antenna(s) 316 and receives reflected radar signals, e.g., via receiving antenna(s) 318 to monitor for laundry/foreign objects traveling through loading opening 108. In some embodiments, millimeter-wave radar sensor 306 (e.g., in cooperation with processing system 304), detects the presence of an object entering laundry chamber 116 based on the inward velocity vector. For example, in some embodiments, the presence of an object entering laundry chamber 116 is detected based on an RAI generated based on reflected radar signals received from receiving antenna(s) 318. Similarly, in some embodiment, millimeter-wave radar sensor 306 (e.g., in cooperation with processing system 304), detects the presence of an object exiting laundry chamber 116 based on the outward velocity vector (e.g., determined based on a RAI generated based on reflected radar signals received from receiving antenna(s) 318.

In some embodiments, during step 402, energy spectrum sensor 310 and standing wave analyzer 308 are not actively transmitting/receiving signals via antenna sites 312/314.

Once the presence of an object is detected during step 404, millimeter-wave radar sensor 306, energy spectrum sensor 310, and standing wave analyzer 308 actively transmit/receive signals via antenna sites 312/314 to generate respective outputs (e.g., radar images, energy spectrums, value indicative of disruption of standing wave) so that processing system detects one or more properties of the detected object. For example, in some embodiments, millimeter-wave radar sensor 306, energy spectrum sensor 310, and standing wave analyzer 308 actively transmit/receive signals via antenna sites 312/314 sequentially in a round-robin manner. By operating millimeter-wave radar sensor 306, energy spectrum sensor 310, and standing wave analyzer 308 sequentially, some embodiments advantageously allow for using the same or similar frequency bands for two or more of millimeter-wave radar sensor 306, energy spectrum sensor 310, and standing wave analyzer 308 without causing interference.

In some embodiments, millimeter-wave radar sensor 306, energy spectrum sensor 310, and standing wave analyzer 308 actively transmit/receive signals via antenna sites 312/314 simultaneously. In some such embodiments, interference between radar signals (from millimeter-wave radar sensor 306), RF signals (from energy spectrum sensor 310) and standing wave signals (from standing wave analyzer 308) may be avoiding by operating millimeter-wave radar sensor 306, energy spectrum sensor 310, and standing wave analyzer 308, at different frequency bands. For example, in some embodiments, millimeter- wave radar sensor 308 transmits radar signals between 24 GHz and 80 GHz, such as between 57 GHz and 64 GHz, energy spectrum sensor 310 generates signals between 1 MHz and 100 MHz, and the standing wave is generated at frequencies lower than 1 MHz. Other frequency ranges may also be used.

In some embodiments, the capturing of the data from millimeter-wave radar sensor 306, energy spectrum sensor 310, and standing wave analyzer 308 for the generation of the radar images, energy spectrums, and values indicative of a disruption of a standing wave may be substantially faster than generating the radar images, energy spectrums, and values indicative of a disruption of a standing wave and faster than the determination of the one or more properties of the objects detected during step 404. For example, in some embodiments, the capturing of the data from millimeter-wave radar sensor 306, energy spectrum sensor 310, and standing wave analyzer 308 during a round-robin implementation may be less than 500 $\mu$s, while the generation of a radar image, an energy spectrum, and a value indicative of a disruption in a standing wave may take 10 ms or more. Thus, in some embodiments, the capturing of the data from millimeter-wave radar sensor 306, energy spectrum sensor 310, and standing wave analyzer 308, and the processing of such data may take place at different times (e.g., with the aid of a memory to temporarily store the captured data). In some embodiments, the generation of a radar image, an energy spectrum, and a value indicative of a disruption in a standing wave may take less than 10 ms.

If it is determined during step 408 that the direction of movement of the object (determined during step 402) is inward (object entering laundry chamber 116), then such object is considered to be part of the loaded laundry and is considered during step 212 for determining the operating cycle of the laundry machine. If it is determined during step 408 that the direction of movement of the object (determined during step 402) is outward (object exiting laundry chamber 116), then such object is not considered to be part of the loaded laundry and is not considered during step 212 for determining the operating cycle of the laundry machine.

Figure 5 shows a front view of loading opening 108, according to an embodiment of the present invention. As shown, antenna sites 312 and 314 are disposed opposite to each other at edge 110 with the FoV of antenna site 312 covering antenna site 314 and with the FoV of antenna site 314 covering antenna site 312. In some embodiments, the location of antenna sites 312 and 314 may be chosen so as to obtain a desired (e.g., optimized) FoV coverage of loading opening 108.

In some embodiments, the FoV of antenna sites 312 and/or antenna sites 314 may extend towards laundry chamber 116. Thus, some embodiments may continue to monitor the laundry inside laundry chamber 116, e.g., during an operating cycle (e.g., washing/drying) of laundry machine 100.

Figure 6 shows a flow chart of embodiment method 600 for monitoring laundry during an operating cycle of laundry machine 100, according to an embodiment of the present invention. Method 600 includes steps 216, 602, 604, and 606. Step 216 may be performed in a similar manner as described with respect to Figure 2. Figure 6 may be understood in view of Figure 3.

In some embodiments, standing wave analyzer 308 and energy spectrum sensor 310 are not actively operating during step 216. In some embodiments, millimeter-wave radar sensor 306 remains active during step 214, where the FoV of millimeter-wave radar sensor 306 extends towards at least a portion of laundry chamber 116.

During step 602, millimeter-wave radar sensor 306 monitors at least a portion of laundry chamber 116 by transmitting/receiving radar signals via antenna sites 312 and/or 314. If a foreign object (e.g., resulting from a native object that detached), or some other risk (e.g., release of excessive lint, etc.) is detected during step 604, then an action, such as alerting a user and/or stopping the operating cycle of laundry machine 100, may be taken during step 606.

In some embodiments, step 602 is performed while the rotary drum is rotating. For example, in some embodiments, the velocity and trajectory of an object (e.g., as detected by millimeter-wave radar sensor 306), in combination with the rotational speed of the rotary drum may be used to identify one or more properties of an object, where such properties may be used during step 604 to identify a risk. In some embodiments, step 602 is performed while the rotary drum is not rotating.

Figure 7 illustrates a block diagram of embodiment method 700 for generating radar images using millimeter-wave radar sensor 306, according to an embodiment of the present invention. The radar images generated using method 700 may be used, e.g., for detecting presence location of an object (e.g., during steps 204, 402, 404) and/or for detecting one or more properties of the detected object (e.g., during steps 204, 206, 212, 406, 408). In steps 702, 704, 708, 710, and 713, radar data is collected from millimeter-wave radar sensor 306 and objects are detected in the field of view of millimeter-wave radar sensor 306. In step 720, and 738, a 2D RAI having azimuth and depth information is generated, in part, using a Capon/MVDR analysis.

During step 702, live radar data is collected from millimeter wave radar sensor 306. In some embodiments, the radar data is collected from digitized baseband radar data and may include separate baseband radar data from multiple antennas (e.g., from receiving antennas 318). In some embodiments, these antennas may be "virtual antennas."

During step 704, signal conditioning, low pass filtering and background removal is performed. During step 704, radar data received during step 702 is filtered, DC components are removed, and intermediate frequency (IF) data is filtered, e.g., to remove the Tx-Rx self-interference and optionally pre-filtering the interference colored noise. In some embodiments, filtering includes removing data outliers that have significantly different values from other neighboring range-gate measurements. Thus, this filtering also serves to remove background noise from the radar data. In some embodiments, a Hampel filter is applied with a sliding window at each range-gate to remove such outliers. Alternatively, other filtering for range preprocessing known in the art may be used.

During step 708 a series of FFTs are performed on conditioned radar data produced during step 404. In some embodiments, a windowed FFT having a length of the chirp (e.g., 256 samples) is calculated along each waveform for each of a predetermined number of chirps in a frame of data. Alternatively, other frame lengths may be used. The FFTs of each waveform or chirp may be referred to as a "range FFT." In alternative embodiments, other transform types could be used besides an FFT, such as a Discrete Fourier Transform (DFT) or a z-transform. During step 710, the results of each range FFT are stored in slow time.

During step 713, a Doppler FFT is derived based on a series of range FFTs collected in slow time. In some embodiments, calculating the Doppler FFT entails calculating a windowed two-dimensional FFT of the range FFT over slow-time to determine the velocity and vibration of detected objects.

In various embodiments, a beam is formed at the transmitter by post processing a plurality of baseband signals based on a plurality of signals received by different receiving antennas (e.g., 318) or a combination thereof. Implementing beamforming by post processing received baseband signals may allow for the implementation of a low complexity transmitter.

In one example, millimeter-wave radar sensor 308 uses $N_t$ = 2 transmit (TX) elements and $N_r$ = 2 receive (RX) elements arranged in a linear array. Accordingly, there are $N_t \times N_r$ = 4 distinct propagation channels from the TX array to the RX array in a linear array configuration for azimuth angle profiling. If the transmitting source (TX channel) of the received signals can be identified at the RX array, a virtual phased array of $N_t \times N_r$ elements can be synthesized with $N_t + N_r$ antenna elements. In various embodiments, a time division multiplexed MIMO array provides a low cost solution to a fully populated antenna aperture capable of near field imaging.

Denoting the 3D positional coordinates of the TX antenna element as $d_i^{Tx}, i = 1, 2$ and the RX antenna element as $d_j^{Rx}, j = 1, 2$ in space, then on assuming far field conditions, the signal propagation from a TX element $d_i^{Tx}$ to a target (assumed to be a point scatterer) and subsequently the reflection from target the target to Rx antenna element $d_j^{Rx}$ can be approximated as $2 * x + d_{ij}$, where $x$ is the based distance of the target to the center of the virtual linear array, and $d_{ij}$ refers to the position of the virtual element to the center of the array.

The transmit steering vector may be written as:

$$a_i^{Tx}(\theta,\phi) = \exp\left(-j2\pi \frac{d_i^{Tx} u(\theta,\phi)}{\lambda}\right); i = 1, 2 \quad (1)$$

and the receiving steering vector may be expressed as:

$$a_j^{Rx}(\theta,\phi) = \exp\left(-j2\pi \frac{d_j^{Rx} u(\theta,\phi)}{\lambda}\right); j = 1, 2 \quad (2)$$

where $\lambda$ is the wavelength of the transmit signal. A joint TX and RX steering vector $\mathbf{a}(\theta, \phi)$ can be derived as the Kronecker of the transmit and receive steering vectors (assuming $i = j = 1$):

$$a(\theta,\phi) = a_i^{Tx}(\theta,\phi) \otimes a_j^{Rx}(\theta,\phi); i = j = 1 \quad (3)$$

From the joint steering vector, the following beamspace spectrum may be computed from which angles $\theta$ and $\phi$ may be estimated according to a minimum variance distortionless response (MVDR) algorithm:

$$P(\theta,\phi) = \frac{a(\theta,\phi)^H a(\theta,\phi)}{a(\theta,\phi)^H C^{-1} a(\theta,\phi)} \quad (4)$$

In the above expression, $C = E\{x(r,d)x(r,d)^H\}$ is calculated as a covariance matrix, where E{.} is the expectation operator. The above covariance matrix may be estimated as sample matrix indicator as

$$C = \frac{1}{N}\sum_{n=1}^{N} x_i(r,d)\, x_i(r,d)^{\mathrm{H}} \quad (5)$$

where $x_i(r, d)$ represents measured range, Doppler data (r, d).

For the generation of 2D images in which azimuth and range are considered, the value of angle $\phi$ may be known or assumed and the determination of angle $\phi$ may be omitted. For example, in some embodiments, $\phi$ is equal to zero. In various embodiments, a MVDR algorithm is applied as follows.

During step 722 data is saved from all virtual antennas in a line of detected range-Doppler bins. During step 724, the antenna covariance matrix of the detected range-Doppler bins is estimated as follows:

$$R_{r,d} = \sum_{n=1}^{N} \underline{x}_{r,d}(n)\underline{x}_{r,d}(n)^H, \quad (6)$$

where $R_{r,d}$ is antenna covariance matrix, $\underline{x}_{r,d}(n)$ represents the data over a particular (range, Doppler) = (r,d) and $n$ represents the specific (r,d) data across multiple frames (n being the indices, and N is the number of frames considered). During step 726, a MVDR algorithm is applied to the range and Doppler data as follows using the above derived covariance matrix:

$$P(\theta)=\frac{\underline{a}(\theta)^H \underline{a}(\theta)}{\underline{a}(\theta)^H R_{r,d}^{-1}, \underline{a}(\theta)}, \quad (7)$$

where $P(\theta)$ represents azimuth spatial spectrum, and $\underline{a}(\theta)$ is the virtual antenna steering vector along the azimuth angle for test angle $\theta$ within the field of view. In an embodiment, the value $\theta$ is found that provides a peak value for $P(\theta)$. This determined value for $\theta$ is the estimated azimuth angle $\theta_{est}$ of the detected object.

During step 738, a RAI having azimuth and range information is generated. In some embodiments, the 2D radar image includes information for all range bins. In other embodiments, the 2D image only includes information in the range bins in which objects have been identified. Range bins without an identified object are populated with, e.g., zeros.

Figure 8 illustrates a block diagram of embodiment method 800 for generating energy spectrums using energy spectrum sensor 310, according to an embodiment of the present invention. The energy spectrums generated using method 800 may be used, e.g., for detecting one or more properties of the detected object (e.g., during steps 204, 206, 212, 406, 408).

During step 802, live ADC data is collected from energy spectrum sensor 310. For example, in some embodiments, transmitting antenna(s) 316 transmits RF signals, receiving antenna(s) 318 receive associated reflected RF signals (e.g., which reflected from one or more objects in loading opening 108, and receiving antenna(s) 324 receive associated propagated RF signals (e.g., which propagated from transmitting antenna(s) 316 to receiving antenna(s) 324). Live data associated with the reflected RF signals and/or the propagated RF signals is collected (and, e.g., temporarily stored in memory) during step 802.

During step 804, signal conditioning is performed. For example, in some embodiments, signal filtering (e.g., with low-pass/band-pass filters), channel equalization (e.g., to improve the quality of reference signal), and removal of unwanted components from digital signals, is performed during step 804. In some embodiments, an adaptive filter is used during step 804 to improve the signal-to-interference ratio (e.g., by removing interference, e.g., from signals flowing directly from transmitting antenna(s) 316 to receiving antenna(s) 318).

During step 806, cross-correlation is performed between the received signals (e.g., the received reflected RF signal or the propagated RF signal) and the transmitted (or reconstructed) signal. For example, in some embodiments, a 2D cross-correlation is performed between the transmitted signal and the received reflected signal using, e.g., DFT. In some embodiments, a 2D cross-correlation is performed between a reconstructed version of the transmitted signal (e.g., retrieved from memory) and the received propagated signal using, e.g., DFT. In some embodiments, using a reconstructed version of the transmitted signal instead of the transmitted signal for performing the 2D cross-correlation with the propagated signal advantageously facilitates real-time performance of the 2D cross-correlation, e.g., since the transmitted RF signal is at a different site (e.g., 312) than the received propagated RF signal (e.g., 314). For example, in some embodiments, since the properties of the transmitted signal are known, the reconstructed version of the transmitted signal is (e.g., permanently) stored in a (e.g., non-volatile) memory of antenna site 314 prior to the transmission of the transmitted signals from antenna site 312.

The output generated by the 2D cross-correlation may provide an estimate of the bistatic range and/or bistatic Doppler of each target echo (e.g., as the target travels through loading opening 108).

In some embodiments, the signal processing gain is equal to the time-bandwidth product, BT, where B is the waveform bandwidth and T is the length of the signal sequence being integrated. The integration times are limited by the time the object is kept in loading opening (as the object travels, e.g., into laundry chamber 116). Summing over the output of the cross-correlation block may provide the energy of the received (reflected or propagated) signal.

During step 810, the direction of arrival of echoes are calculated using radar beamforming techniques (e.g., as described with respect to Figure 7) to generate a measured energy spectrum during step 812. Such measured energy spectrum may be generated for the propagated RF signals, and/or for the reflected RF signals.

Figure 9 illustrates a block diagram of embodiment method 900 for generating a value indicative of a standing wave disruption using standing waveform analyzer 308, according to an embodiment of the present invention.

During step 902, a standing wave is generated across loading opening 108. For example, in some embodiments, transmitting antennas 316 and 322 at antenna sites 312 and 314, respectively, transmit waves towards each other to mimic the two opposite waves (e.g., with the same frequency and amplitude). Since the generated waves have the same frequency and amplitude, the resulting standing wave (when no object is in loading opening 108) has zero amplitude at nodes, thereby causing the standing wave ratio (SWR) to be infinite, e.g., mimicking a pure standing wave. In some embodiments, the transmitted waves have a frequency selected based on the distance between the transmitting antennas 216 and 322 so that the location of transmitting antennas 316 and 322 coincide with a node (location of the standing wave having a minimum amplitude).

During step 904, receiving antennas 318 and 324 (e.g., collocated with transmitting antennas 316 and 322, respectively) are used (e.g., in cooperation with control circuits 320 and 326m, respectively) to determine amplitude, phase, and SWR of the standing wave at the location of the receiving antennas 318 and 324, respectively.

During step 906, one or more values indicative of the disruption of the standing wave are generated. For example, in some embodiments, the difference in amplitude/phase/SWR between a reference standing wave (the standing wave amplitude when no object in loading opening 106) and the amplitude/phase/SWR at one of the antenna sites (e.g., 312 or 314) may be used as a value indicative of the standing wave disruption. In some embodiments, the difference in amplitude/phase/SWR between the amplitude/phase/SWR at one of the antenna sites (e.g., 312) and the other antenna site (e.g., 314) may be used as a value indicative of the standing wave disruption. Such difference may be indicative of a (e.g., partially) reflective object being present in loading opening 106.

As a non-limiting example, the output of step 906 may be 9 different values, namely: an amplitude difference between the reference standing wave and the amplitude at antenna site 312, an amplitude difference between the reference standing wave and the amplitude at antenna site 314, an amplitude difference between the amplitude at antenna site 312 and the amplitude at antenna site 314, a phase difference between the reference standing wave and the phase at antenna site 312, a phase difference between the reference standing wave and the phase at antenna site 314, a phase difference between the phase at antenna site 312 and the phase at antenna site 314, an SWR difference between the reference standing wave and the SWR at antenna site 312, an SWR difference between the reference standing wave and the SWR at antenna site 314, and an SWR difference between the phase at antenna site 312 and the phase at antenna site 314. More values (e.g., 10 or more), less values (e.g., 8, 7, 6, 5, 4, 3, 2,1), and/or different values may (e.g., the raw amplitude, phase (e.g., between transmitted and receive signals at the same antenna site), and SWR measured at antenna sites 312 and 214) also be used.

In some embodiments, one or more values generated during step 906 may advantageously allow for detection of hidden objects (e.g., hidden inside a pocket of a shirt or pant) and for the determination of one or more properties of the object crossing loading opening 106 (e.g., surface character of laundry).

In some embodiments, outputs from millimeter-wave radar sensor 306, standing wave analyzer 308, and energy spectrum sensor 310 are processed by a neural network for determining one or more properties of an object traveling through loading opening 108 and/or determining an operating cycle of laundry machine 100 based on the loaded laundry inside laundry chamber 116. For example, in some embodiments, raw data from sensors 306, 308, and 310 are preprocessed to build generalized discriminative class clusters for rejecting unknown classes while being able to classify safe clothes class with high accuracy. For example, Figure 10 shows a block diagram of neural network 1000, according to an embodiment of the present invention. Neural network 1000 may be implemented by processing system 304, such as by an AI accelerator of processing system 304.

As shown in Figure 10, neural network 1000 may be implemented as a deep neural network having convolutional layers 1002, convolutional layers 1004, convolutional layers and/or fully-connected layers 1006, fully-connected layers 1008, 1010, 1012, 1014, 1016, 1018, 1020, and 1022, and long short-term memory (LSTM) or temporal convolutional network (TCN) 1024.

During normal operation (e.g., during step 204, e.g., during step 406), convolutional layers 1002 receive radar images (e.g., RAIs) from millimeter-wave radar sensor 306. The outputs of convolutional layers 1002 are fed to convolutional layers 1004, and the outputs of convolutional layers 1004 are fed to convolutional layers and/or fully-connected layers 1006. Convolutional layers and/or fully-connected layers 1006 also receive energy spectrums from energy spectrum sensor 310 and/or standing wave disruption values from standing wave analyzer 308. For example, in some embodiments, for each given cloth passing through loading opening 108, convolutional layers 306 receives a RAI from millimeter-wave radar sensor 306 and convolutional layers and/or fully-connected layers 1006 receive an energy spectrum from energy spectrum sensor 310 and/or a standing wave disruption value(s) from standing wave analyzer 308. The output of layers 1006 are fed to fully-connected layers 1008, 1010, 1012, 1014, 1016, 1018, 1020, 1022.

In some embodiments, fully-connected layers 1008, 1010, 1012, 1014, 1016, 1018, 1020, and 1022 generate respective outputs associated with a given cloth. For example, in some embodiments, fully-connected layers 1008, 1010, 1012, 1014, 1016, 1018, and 1020 are each implemented with SoftMax, support vector machine (SVM), or k-nearest neighbor, e.g., for working on the embedding output to classify, respectively, whether the given cloth is printed or not; whether the given cloth is tightly, medium, or loosely woven; whether the given cloth has potential for lint release; whether the given cloth has an abrasive native object present; whether the given cloth is a foreign object (e.g., it is a coin, key, credit card, etc., instead of a piece of cloth), whether the given cloth is dry or wet; and the level of dirt of the given cloth.

In some embodiments, the output of layer 1016 is used during step 206 to determine whether a foreign object is present.

In some embodiments, the output of fully-connected layer 1022 is fed to LSTM/TCN layer 1024, e.g., to determine whether the cloth inside laundry chamber 226 is safe or unsafe (e.g., for washing/drying), and/or to propose an operating mode/setting of the laundry machine for the cloth inside laundry chamber 226 (e.g., during 212). By using LSTM/TCN layer (or, e.g., another layer capable of storing temporal information), some embodiments advantageously keep track of the cloth inside chamber 116 (e.g., implicitly performing steps 408, 410, 412), e.g., for determining the settings of the operating cycle of laundry machine 100 (e.g., during step 212), and/or for assessing whether it is safe to begin the operating cycle (e.g., because of the presence of a foreign object inside laundry chamber 116, the mix of different types of cloth (e.g., mixing jeans with wool), the amount of cloth inside laundry chamber 116, etc.

As shown in Figure 10, the output of fully-connect layer 1022 is fed to LSTM/TCN layer 1024. By using a dedicated fully connected layer (e.g., 1022) to feed data to LSTM/TCN layer 1024, some embodiments advantageously optimize the suggested setting for the operating cycle of laundry machine 100. In some embodiments, fully-connected layer 1022 may be omitted, and the outputs of layers 1008, 1010, 1012, 1014, 1016, 1018, and 1020 may be fed to LSTM/TCN 1024.

In some embodiments, neural network 1000 may be adapted to outputs from sensors different than sensors 306, 308, and 310. For example, in some embodiments, outputs from an audio sensor (e.g., microphone) for detecting audio and/or outputs from an accelerometer for detecting vibrations and/or haptic feedback, may also be used as inputs of neural network 1000 (e.g., input to layers 1002 or 1006) for determining one or more properties of cloth and/or for suggesting a setting of the operating cycle of laundry machine 1000.

As shown in Figure 10, neural network 1000 is a multi-task network (e.g., for classifying the cloth and for suggesting a setting for the operating cycle of laundry machine 100) that shares layers 1002, 1004, and 1006, for the plurality of tasks. In some embodiments, parallel networks with similar initial layers for each of the tasks may be used instead of sharing layers 1002, 1004, and 1006. For example, Figure 11 shows a block diagram of neural network 1100, according to an embodiment of the present invention. Neural network 1100 may be implemented by processing system 304, such as by an AI accelerator of processing system 304.

In some embodiments, neural network 1100 is implemented and operates in a similar manner as neural network 1000. Neural network 1100, however, includes parallel networks instead of sharing layers 1002, 1004, and 1006. For example, in some embodiments, each of convolutional layers 1102 (e.g., $1102_1$, $1102_2$, $1102_3$, $1102_4$, $1102_5$, $1102_6$, $1102_7$, $1102_8$) have the same architecture and the coefficients of each of convolutional layers 1102 are constrained to be close to each other in L2 Euclidean sense. Similarly, in some embodiments, each of convolutional layers 1104 (e.g., $1104_1$, $1104_2$, $1104_3$, $1104_4$, $1104_5$, $1104_6$, $1104_7$, $1104_8$) have the same architecture and the coefficients of each of convolutional layers 1104 are constrained to be close to each other in L2 Euclidean sense; and each of convolutional layers 1106 (e.g., $1106_1$, $1106_2$, $1106_3$, $1106_4$, $1106_5$, $1106_6$, $1106_7$, $1106_8$) have the same architecture and the coefficients of each of convolutional layers 1106 are constrained to be close to each other in L2 Euclidean sense. In some embodiments, the constrains for layers 1102, 1104, and 1106 are enforced during training of neural network 1100 so that the resulting coefficients of layers $1102_i$, $1104_i$, and $1106_i$ of each parallel network are close to each other. By using parallel networks, some embodiments may advantageously optimize performance of the classification of cloth and for suggesting settings for the operating cycle of laundry machine 100 by, e.g., using different (e.g., optimized) embedding vectors for the classification of cloth and for suggesting settings for the operating cycle of laundry machine 100.

In some embodiments, neural network 1000 and/or 1100 may be trained, e.g., using supervised learning. For example, Figure 12 shows a block diagram showing an embedding process flow, according to an embodiment of the present invention. The left portion 1200 of Figure 12 is devoted to the embedding process during the training phase. The right portion 1220 is devoted to an inference phase, in which processing and comparison of new inputs (e.g., images and/or standing wave disruption value(s)) using the embedded prediction model with reference inputs takes place. Neural networks 1000 and 1100 may be trained as shown in Figure 12.

During the training phase, inputs (e.g., radar images, energy spectrums and/or standing wave disruption values) associated with measurements of a particular object (e.g., a piece of cloth) are paired with labels associated with such object (e.g., identifying the particular cloth). The inputs and associated labels are received by deep neural network 1204 and coefficients of deep neural network 1204 are updated to optimize the output of deep neural network 1204 to improve the classification accuracy. For example, in some embodiments, a triplet loss based deep metric-learning is used for training neural network 1204, e.g., for abrasive native object detection, foreign object detection, dry/wet detection, level of dirt detection in a round robin fashion once for each epoch by learning an embedding vector that is saved into database 1206.

In some embodiments, given the triplets ($g^p$; $g^a$; $g^n$) where p; a; n represent positive, anchor, and negative examples respectively, a constrain given by

$$\left\|f(g_i^a) - f\left(g_i^p\right)\right\|_2^2 + \alpha < \|f(g_i^a) - f(g_i^n)\|_2^2; \quad \forall f(g_i^a), f\left(g_i^p\right), f(g_i^n) \in T \tag{8}$$

is fulfilled to advantageously ensure that the anchor of a given object is closer to all other objects of same type $g^p$ than sequences of other objects $g^n$ and maintain a defined margin (a) between different gesture sequences.

In some embodiments, the loss function may be given by

$$\sum_{i=1}^N \left[\left\|f(g_i^a) - f\left(g_i^p\right)\right\|_2^2 - \|f(g_i^a) - f(g_i^n)\|_2^2 + \alpha\right]_+ \tag{9}$$

where $[\ ]_+$ represents max(o; x).

In some embodiments, triplet selection for one epoch is made for one task, then for the next task, and so on. In an embodiment having four tasks (e.g., abrasive native object detection, foreign object detection, dry/wet detection, and level of dirt detection) and one temporal task (e.g., suggestion of the operating cycle of laundry machine 100), after every fourth epochs the triplet for a specific task is returned to.

In some embodiments, triplet selection is adapted offline, where after every, e.g., 100 epochs, a checkpoint is saved selecting triplets that are semi-hard negatives (where the positive anchor distance is smaller than that of negative anchor but the negative anchor distance is close to the positive anchor distance and the negatives exist within the margin). In some embodiments, hard negatives are not selected since they may lead to early local minima and poor training.

In some embodiments, the weight initialization for 3D convolutional layers of neural network 1204 may be performed by drawing samples from a normal distribution with zero-mean and standard deviation of, e.g., $10^{-2}$. The respective biases may be initialized with samples drawn from a normal distribution with a mean of, e.g., 0.5 instead of zero. The weights for the dense layers (fully-connected layers) may be initialized with Xavier uniform initializer, which may draw samples from a uniform distribution within [-limit, limit] where the limit is calculated by taking the square root of, e.g., 6 divided by the total number of input and output units in the weight tensor.

In some embodiments, adaptive moment estimation (Adam) optimizer may be used to compute adaptive learning rate for each network weight over the learning process from estimates of first and second moments of the gradients. In configuration parameters, the learning rate (alpha) may be set to, e.g., 0.001 and the exponential decay rate for the first (beta1) and second (beta2) moment estimates may be set to, e.g., 0.9 and 0.999, respectively. The epsilon that counters divide by zero problem may be set to $1e^{-8}$.

Once the system has been trained (after training phase 1200), the resulting deep neural network 1204 may be used during the inference phase, and may be referred to as the predictive deep neural network model 1224. In some embodiments, predictive deep neural network model 1224 corresponds to neural network 1000 or 1100.

During the inference phase (e.g., during step 204, 406), new (e.g., live) inputs are received by predictive deep neural network 1224 from sensors 306, 308, and 310. In some embodiments, the outputs of deep neural network 1224 correspond to the outputs of fully connected SoftMax layers 1008, 1010, 1012, 1014, 1016, 1018, 1020, and 1024.

In some embodiments, layers for the task of predicting (e.g., during step 212) the optimal mode for laundry after clothes are inserted sequentially into laundry chamber 116 (e.g., layers 1022 and 1024) are trained in a similar manner as illustrated in Figure 12.

Advantages of some embodiments include the early detection of foreign objects or native objects with risk of detachment, and the estimation of how harmful such objects would be to the laundry and laundry machine, as well the early estimation of the material, shape, dimension, texture, weight, etc., of laundry and other objects, which may advantageously prevent damage to the laundry and laundry machine by, e.g., alerting a user for the removal of the object before the laundry machine beings an operating cycle and/or optimizing the settings of the operating cycle to prevent minimize damage based on the characteristics of the detected objects.

Some embodiments may advantageously identify, classify, and determine the presence of abrasive native objects based on their material, texture, position, type, and physical nature. Some embodiments may advantageously identify and classify the surface character of the clothes being loaded into a laundry chamber of a laundry machine, together with the composition of the clothes (including early identification of printed clothing surfaces and tied/loosen up buttons). Some embodiments advantageously estimate dry/wet condition of the clothes being loaded on the laundry chamber based on early estimation of moisture content of the clothes. Some embodiments advantageously estimate the level of dirt, and the level of lint and debris clothes may release. In some embodiments, such estimates may be used in selecting an optimized operating cycle for the laundry (e.g., such as optimizing parameters such as temperature, water, amount of detergent, weight, washing cycle power leading to gentle to aggressive friction during washing, etc.).

Some embodiments advantageously notify and assist a user to optimize load capacity and type of clothes to avoid or minimize abrasion of the clothes.

Figure 13 shows a schematic diagram of a possible implementation of millimeter-wave radar sensor 306, according to an embodiment of the present invention. As shown, millimeter-wave radar sensor 306 may operate as a frequency-modulated continuous-wave (FMCW) radar sensor that transmits a plurality of TX radar signals 1306, such as chirps, towards loading opening 108 using transmitter antenna(s) 316. The radar signals 1306 are generated using RF and analog circuits 1330. The radar signals 1306 may be in the 20 GHz to 122 GHz range.

The radar signals 1306 are reflected by objects in loading opening 108. The reflected radar signals 1308, which are also referred to as the echo signal, are received by receiver (RX) antenna(s) 318. RF and analog circuit 1330 processes the received reflected radar signals 1308 using, e.g., band-pass filters (BPFs), low-pass filters (LPFs), mixers, low-noise amplifier (LNA), and/or intermediate frequency (IF) amplifiers in ways known in the art to generate an analog signal $x_{out}(t)$.

The analog signal $x_{out}(t)$ is converted to raw digital data $x_{out_dig}(n)$ using ADC 1312. The raw digital data $x_{out_dig}(n)$ is then transmitted to processing system 304 for further processing.

Controller 1310 controls one or more circuits of millimeter-wave radar sensor 1302, such as RF and analog circuit 1330 and/or ADC 1312. Controller 1310 may be implemented, e.g., as a custom digital or mixed signal circuit, for example. Controller 1310 may also be implemented in other ways, such as using a general purpose processor or controller, for example. In some embodiments, processing system 304 implements a portion or all of controller 1310.

As a non-limiting example, RF and analog circuits 1330 may be implemented, e.g., as shown in Figure 13. During normal operation, VCO 1336 generates a radar signal, such as a linear frequency chirp (e.g., from 57 GHz to 64 GHz, or from 76 GHz to 77 GHz), which is transmitted by transmitting antenna 316. The VCO 1336 is controlled by PLL 1334, which receives a reference clock signal (e.g., 80 MHz) from reference oscillator 1332. PLL 1334 is controlled by a loop that includes frequency divider 1338 and amplifier 1340.

The echo received by receiving antenna(s) 318 is mixed with a replica of the signal transmitted by transmitting antenna(s) 316 using mixer 1346 to produce intermediate frequency (IF) signal $x_{IF}(t)$ (also known as a beat signal). In some embodiments, the beat signals $x_{IF}(t)$ has a bandwidth between 10 kHz and 1 MHz. Beat signals with a bandwidth lower than 10 kHz or higher than 1 MHz is also possible.

Beat signal $x_{IF}(t)$ is filtered with low-pass filter (LPF) 1348 and then sampled by ADC 1312. The raw digital data $x_{out_dig}(n)$ is then processed in ways known in the art to generate a radar image, such as a RAI or RDI, which is then processed (e.g., by neural network 1000 or 1100).

Example embodiments of the present invention are summarized here. Other embodiments can also be understood from the entirety of the specification and the claims filed herein.

Example 1. A method including: transmitting radar signals; receiving reflected radar signals; transmitting radiofrequency signal (RF) signals with a first antenna site towards a second antenna site, where the first antenna site is disposed at an edge of a loading opening of a laundry machine, and where the second antenna site is disposed opposite to the first antenna site at the edge of the loading opening; receiving propagated RF signals with the second antenna site; determining a presence of a first object at the loading opening based on the reflected radar signals; determining a first property of the first object based on the reflected radar signals, and the propagated RF signals; and determining a first configuration of an operating cycle of the laundry machine based on the first property or alerting a user of the first property before the operating cycle of the laundry machine begins.

Example 2. The method of example 1, further including: receiving reflected RF signals with the first antenna site; generating a standing wave at the loading opening; and estimating a first standing wave value indicative of a disruption of the standing wave, where determining the first property is further based on the reflected RF signals and the first standing wave value.

Example 3. The method of one of examples 1 or 2, where transmitting the radar signals, transmitting the RF signals, and generating the standing wave includes simultaneously transmitting the radar signals and the RF signals from the first antenna site while generating the standing wave.

Example 4. The method of one of examples 1 to 3, where transmitting the radar signals, transmitting the RF signals, and generating the standing wave includes transmitting the radar signals, transmitting the RF signals, and generating the standing wave in a round-robin manner.

Example 5. The method of one of examples 1 to 4, where generating the standing wave includes generating the standing wave using the first and second antenna sites.

Example 6. The method of one of examples 1 to 5, further including determining properties of a plurality of objects based on the reflected radar signals, the reflected RF signals, the propagated RF signals, and standing wave values, where the plurality of objects includes the first object, where determining the first configuration of the operating cycle of the laundry machine includes determining the first configuration of the operating based on the properties of the plurality of objects.

Example 7. The method of one of examples 1 to 6, where the radar signals are millimeter-wave radar signals, and where the RF signals have a frequency between 1 MHz and 100 MHz.

Example 8. The method of one of examples 1 to 7, where determining the first property includes using a neural network.

Example 9. The method of one of examples 1 to 8, further including training the neural network using a triplet loss function.

Example 10. The method of one of examples 1 to 9, further including: generating a first radar image based on the reflected radar signals; receiving the first radar image with a first convolutional layer of the neural network; generating a first energy spectrum based on the propagated RF signals; receiving the first energy spectrum with a second convolutional layer of the neural network, the second convolutional layer having inputs coupled to outputs of the first convolutional layer; and a first fully-connected layer having an input coupled to an output of the second convolutional layer and an output for generating an indication of the first property.

Example 11. The method of one of examples 1 to 10, where the neural network includes a plurality of fully-connected layers having inputs coupled to outputs of the second convolutional layer, where each of the plurality of fully-connected layers generate an indication of a respective property of the first object.

Example 12. The method of one of examples 1 to 11, where the neural network includes: a plurality of first convolutional layers for receiving the first radar image, where the plurality of first convolutional layers includes the first convolutional layer; a plurality of second convolutional layers for receiving the first energy spectrum, where the plurality of second convolutional layers includes the second convolutional layer; and a plurality of fully-connected layers having inputs coupled to outputs of respective second convolutional layers, where the plurality of fully-connected layers includes the first fully-connected layer, where each of the plurality of fully-connected layers generate an indication of a respective property of the first object.

Example 13. The method of one of examples 1 to 12, where determining the first configuration of the operating cycle of the laundry machine includes using an LSTM layer or TCN layer of the neural network.

Example 14. The method of one of examples 1 to 13, where determining the presence of the first object at the loading opening includes determining a velocity of the first object, the method further including determining that the first object is inside a laundry chamber of the laundry machine based on the velocity.

Example 15. The method of one of examples 1 to 14, where the first property is indicative of the first object being a foreign object.

Example 16. The method of one of examples 1 to 15, where the first property is indicative of the first object being a native object at risk of detachment.

Example 17. The method of one of examples 1 to 16, where the first property is indicative of a material of the first object.

Example 18. The method of one of examples 1 to 17, where the first property is indicative of a shade of the first object, whether the first object is printed, a potential for lint release from the first object, whether the first object is wet or dry, or a level of dirt of the first object.

Example 19. The method of one of examples 1 to 18, further including alerting the user of the first property by causing a screen of the laundry machine or a mobile app to display information about the first property.

Example 20. The method of one of examples 1 to 19, where the laundry machine is a top-loading or side-loading washer or dryer machine.

Example 21. The method of one of examples 1 to 20, further including: determining a presence of a second object at the loading opening based on the reflected radar signals; determining a second property of the second object based on the reflected radar signals, and the propagated RF signals, where the second property is indicative of the second object being a foreign object; alerting the user that the second object is a foreign object based on the second property; and detecting a removal of the second object from a laundry chamber of the laundry machine based on the reflected radar signals.

Example 22. The method of one of examples 1 to 21, where transmitting RF signals with the first antenna site includes transmitting RF signals using amplitude-shift keying (ASK), frequency-shift keying (FSK), or phase-shift keying (PSK) modulation.

Example 23. The method of one of examples 1 to 22, further including performing a two-dimensional (2D) cross correlation between the propagated RF signals and reconstructed transmitted RF signals to generate an energy spectrum, where determining the first property includes determining the first property based on the energy spectrum.

Example 24. The method of one of examples 1 to 23, further including operating the laundry machine according to the first configuration, and, while operating the laundry machine according to the first configuration, continue transmitting the radar signals and receiving reflected radar signals to detect properties of objects in a laundry chamber of the laundry machine; and alerting the user or stopping the operating cycle of the laundry machine when a property of an object in the laundry chamber is indicative of a foreign object.

Example 25. The method of one of examples 1 to 24, where the first antenna site includes a plurality of antennas of different types, and a selection circuit for selecting a subset of the plurality of antennas for transmitting or receiving signals.

Example 26. The method of one of examples 1 to 25, where transmitting the radar signals includes transmitting the radar signals from the first antenna site.

Example 27. A method including: transmitting radar signals; receiving reflected radar signals; transmitting radio-frequency signal (RF) signals with a first antenna site towards a second antenna site, where the first antenna site is disposed at an edge of a loading opening of a laundry machine, and where the second antenna site is disposed opposite to the first antenna site at the edge of the loading opening; receiving propagated RF signals with the second antenna site; generating a standing wave at the loading opening; and estimating a first standing wave value indicative of a disruption of the standing wave determining a presence of a first object at the loading opening based on the reflected radar signals; determining a first property of the first object based on the propagated RF signals and the first standing wave value; and determining a first configuration of an operating cycle of the laundry machine based on the first property or alerting a user of the first property before the operating cycle of the laundry machine begins.

Example 28. A laundry machine including: a laundry chamber having a loading opening; a first antenna site including a first transmitting antenna and a first receiving antenna; a second antenna site including a second transmitting antenna and a second receiving antenna, where the first and second antenna sites are disposed opposite to each other at an edge of the loading opening; a millimeter-wave radar sensor configured to transmit radar signals using the first transmitting antenna and receive reflected radar signals using the second transmitting antenna; a standing wave analyzer configured to generate a standing wave at the loading opening using the first and second antenna sites and estimate a first standing wave value indicative of a disruption of the standing wave; and a processing system configured to: determine a presence of a first object at the loading opening based on the reflected radar signals, determine a first property of the first object based on the reflected radar signals and the first standing wave value, and determine a first configuration of an operating cycle of the laundry machine based on the first property or alert a user of the first property before the operating cycle of the laundry machine begins.

Example 29. A system including: a first antenna site; a second antenna site, where the first and second antenna sites are disposed opposite to each other at an edge of an opening; a millimeter-wave radar sensor configured to transmit radar signals using the first antenna site and receive reflected radar signals using the second antenna site; an energy spectrum sensor configured to transmit radio-frequency signal (RF) signals with the first antenna site towards the second antenna site, and receive propagated RF signals with the second antenna site; a standing wave analyzer configured to generate a standing wave at a loading opening using the first and second antenna sites and estimate a first standing wave value indicative of a disruption of the standing wave; and a processing system configured to: determine a presence of a first object at the opening based on the reflected radar signals, determine a first property of the first object based on the reflected radar signals, the propagated RF signals, and the first standing wave value, and alert a user of the first property.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

**1.** A method comprising:

transmitting radar signals;

receiving reflected radar signals;
transmitting radio-frequency signal (RF) signals with a first antenna site towards a second antenna site, wherein the first antenna site is disposed at an edge of a loading opening of a laundry machine, and wherein the second antenna site is disposed opposite to the first antenna site at the edge of the loading opening;
receiving propagated RF signals with the second antenna site;
determining a presence of a first object at the loading opening based on the reflected radar signals;
determining a first property of the first object based on the reflected radar signals, and the propagated RF signals; and
determining a first configuration of an operating cycle of the laundry machine based on the first property or alerting a user of the first property before the operating cycle of the laundry machine begins.

**2.** The method of claim 1, further comprising:

receiving reflected RF signals with the first antenna site;
generating a standing wave at the loading opening; and
estimating a first standing wave value indicative of a disruption of the standing wave, wherein determining the first property is further based on the reflected RF signals and the first standing wave value.

**3.** The method of claim 2, wherein transmitting the radar signals, transmitting the RF signals, and generating the standing wave comprises one of:

- simultaneously transmitting the radar signals and the RF signals from the first antenna site while generating the standing wave; or
- transmitting the radar signals, transmitting the RF signals, and generating the standing wave in a round-robin manner.

**4.** The method of claim 2 or 3, wherein generating the standing wave comprises generating the standing wave using the first and second antenna sites.

**5.** The method of any one of claims 1 to 4, further comprising determining properties of a plurality of objects based on the reflected radar signals, the reflected RF signals, the propagated RF signals, and standing wave values, wherein the plurality of objects comprises the first object, wherein determining the first configuration of the operating cycle of the laundry machine comprises determining the first configuration of the operating based on the properties of the plurality of objects.

**6.** The method of any one of claims 1 to 5, wherein determining the first property comprises using a neural network, the method further comprising:

generating a first radar image based on the reflected radar signals;
receiving the first radar image with a first convolutional layer of the neural network;
generating a first energy spectrum based on the propagated RF signals;
receiving the first energy spectrum with a second convolutional layer of the neural network, the second convolutional layer having inputs coupled to outputs of the first convolutional layer; and a first fully-connected layer having an input coupled to an output of the second convolutional layer and an output for generating an indication of the first property.

**7.** The method of claim 6, wherein the neural network comprises one of:

- a plurality of fully-connected layers having inputs coupled to outputs of the second convolutional layer, wherein each of the plurality of fully-connected layers generate an indication of a respective property of the first object; or
- a plurality of first convolutional layers for receiving the first radar image, wherein the plurality of first convolutional layers comprises the first convolutional layer; a plurality of second convolutional layers for receiving the first energy spectrum, wherein the plurality of second convolutional layers comprises the second convolutional layer; and a plurality of fully-connected layers having inputs coupled to outputs of respective second convolutional layers, wherein the plurality of fully-connected layers comprises the first fully-connected layer, wherein each of the plurality of fully-connected layers generate an indication of a respective property of the first object.

**8.** The method of any one of claims 1 to 7, wherein determining the first property comprises using a neural network, and

wherein determining the first configuration of the operating cycle of the laundry machine comprises using an LSTM layer or TCN layer of the neural network.

**9.** The method of any one of claims 1 to 8, wherein determining the presence of the first object at the loading opening comprises determining a velocity of the first object, the method further comprising determining that the first object is inside a laundry chamber of the laundry machine based on the velocity.

**10.** The method of claim 1, wherein the first property is indicative of one of:

- the first object being a foreign object;
- the first object being a native object at risk of detachment.;
- a material of the first object;
- a shade of the first object;
- whether the first object is printed;
- a potential for lint release from the first object;
- whether the first object is wet or dry; or
- a level of dirt of the first object.

**11.** The method of any one of claims 1 to 10, further comprising alerting the user of the first property by causing a screen of the laundry machine or a mobile app to display information about the first property.

**12.** The method of any one of claims 1 to 11, further comprising at least one of:

- determining a presence of a second object at the loading opening based on the reflected radar signals; determining a second property of the second object based on the reflected radar signals, and the propagated RF signals, wherein the second property is indicative of the second object being a foreign object; alerting the user that the second object is a foreign object based on the second property; and detecting a removal of the second object from a laundry chamber of the laundry machine based on the reflected radar signals.;
- performing a two-dimensional (2D) cross correlation between the propagated RF signals and reconstructed transmitted RF signals to generate an energy spectrum, wherein determining the first property comprises determining the first property based on the energy spectrum; or
- operating the laundry machine according to the first configuration, and, while operating the laundry machine according to the first configuration, continue transmitting the radar signals and receiving reflected radar signals to detect properties of objects in a laundry chamber of the laundry machine; and alerting the user or stopping the operating cycle of the laundry machine when a property of an object in the laundry chamber is indicative of a foreign object.

**13.** The method of any one of claims 1 to 12, wherein:

- transmitting RF signals with the first antenna site comprises transmitting RF signals using amplitude-shift keying (ASK), frequency-shift keying (FSK), or phase-shift keying (PSK) modulation; and/or
- the first antenna site comprises a plurality of antennas of different types, and a selection circuit for selecting a subset of the plurality of antennas for transmitting or receiving signals; and/or
- transmitting the radar signals comprises transmitting the radar signals from the first antenna site.

**14.** A laundry machine comprising:

a laundry chamber having a loading opening;
a first antenna site comprising a first transmitting antenna and a first receiving antenna;
a second antenna site comprising a second transmitting antenna and a second receiving antenna, wherein the first and second antenna sites are disposed opposite to each other at an edge of the loading opening;
a millimeter-wave radar sensor configured to transmit radar signals using the first transmitting antenna and receive reflected radar signals using the second transmitting antenna;
a standing wave analyzer configured to generate a standing wave at the loading opening using the first and second antenna sites and estimate a first standing wave value indicative of a disruption of the standing wave; and
a processing system configured to:

determine a presence of a first object at the loading opening based on the reflected radar signals,

determine a first property of the first object based on the reflected radar signals and the first standing wave value, and

determine a first configuration of an operating cycle of the laundry machine based on the first property or alert a user of the first property before the operating cycle of the laundry machine begins.

**15.** A system comprising:

a first antenna site;

a second antenna site, wherein the first and second antenna sites are disposed opposite to each other at an edge of an opening;

a millimeter-wave radar sensor configured to transmit radar signals using the first antenna site and receive reflected radar signals using the second antenna site;

an energy spectrum sensor configured to transmit radio-frequency signal (RF) signals with the first antenna site towards the second antenna site, and receive propagated RF signals with the second antenna site;

a standing wave analyzer configured to generate a standing wave at a loading opening using the first and second antenna sites and estimate a first standing wave value indicative of a disruption of the standing wave; and

a processing system configured to:

determine a presence of a first object at the opening based on the reflected radar signals,

determine a first property of the first object based on the reflected radar signals, the propagated RF signals, and the first standing wave value, and

alert a user of the first property.

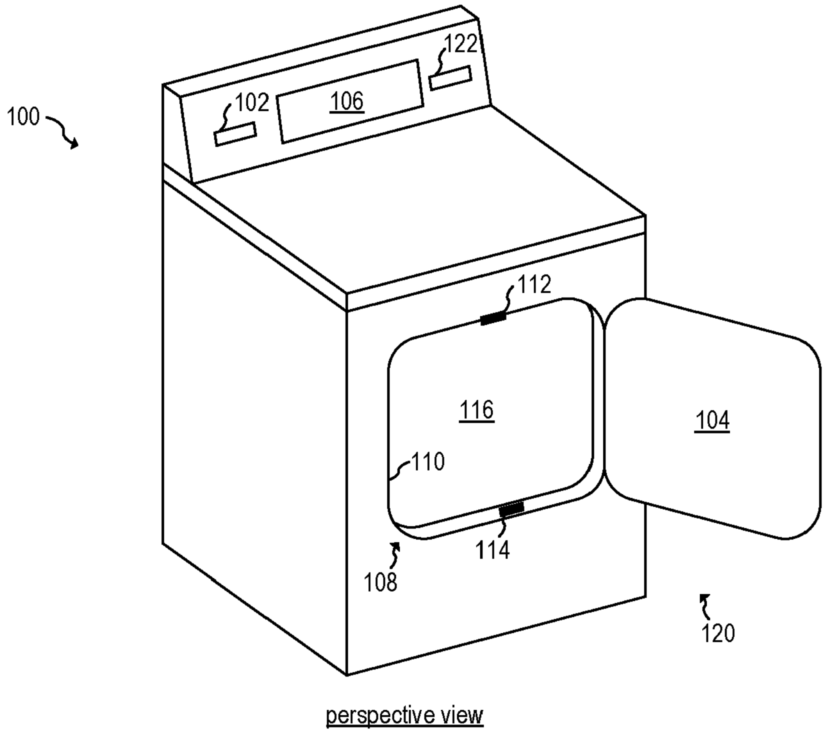
100
102
106
122
112
116
104
110
114
108
120
perspective view

FIG. 1

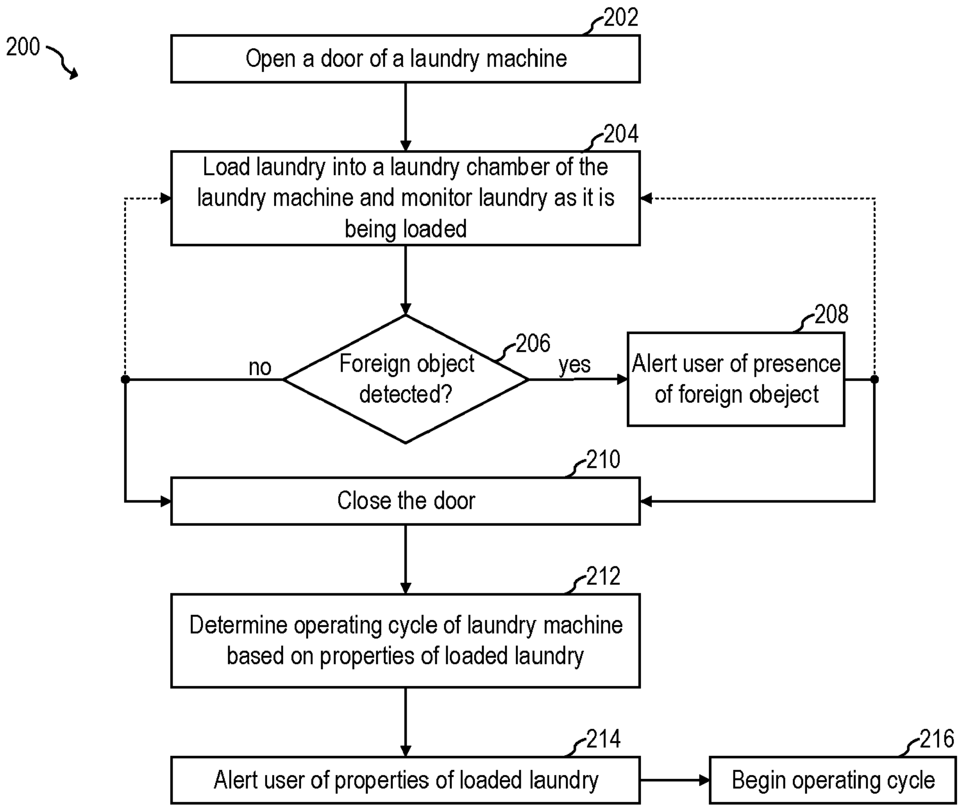
200
202
Open a door of a laundry machine
204
Load laundry into a laundry chamber of the laundry machine and monitor laundry as it is being loaded
206
Foreign object detected?
no
yes
208
Alert user of presence of foreign obeject
210
Close the door
212
Determine operating cycle of laundry machine based on properties of loaded laundry
214
Alert user of properties of loaded laundry
216
Begin operating cycle

FIG. 2

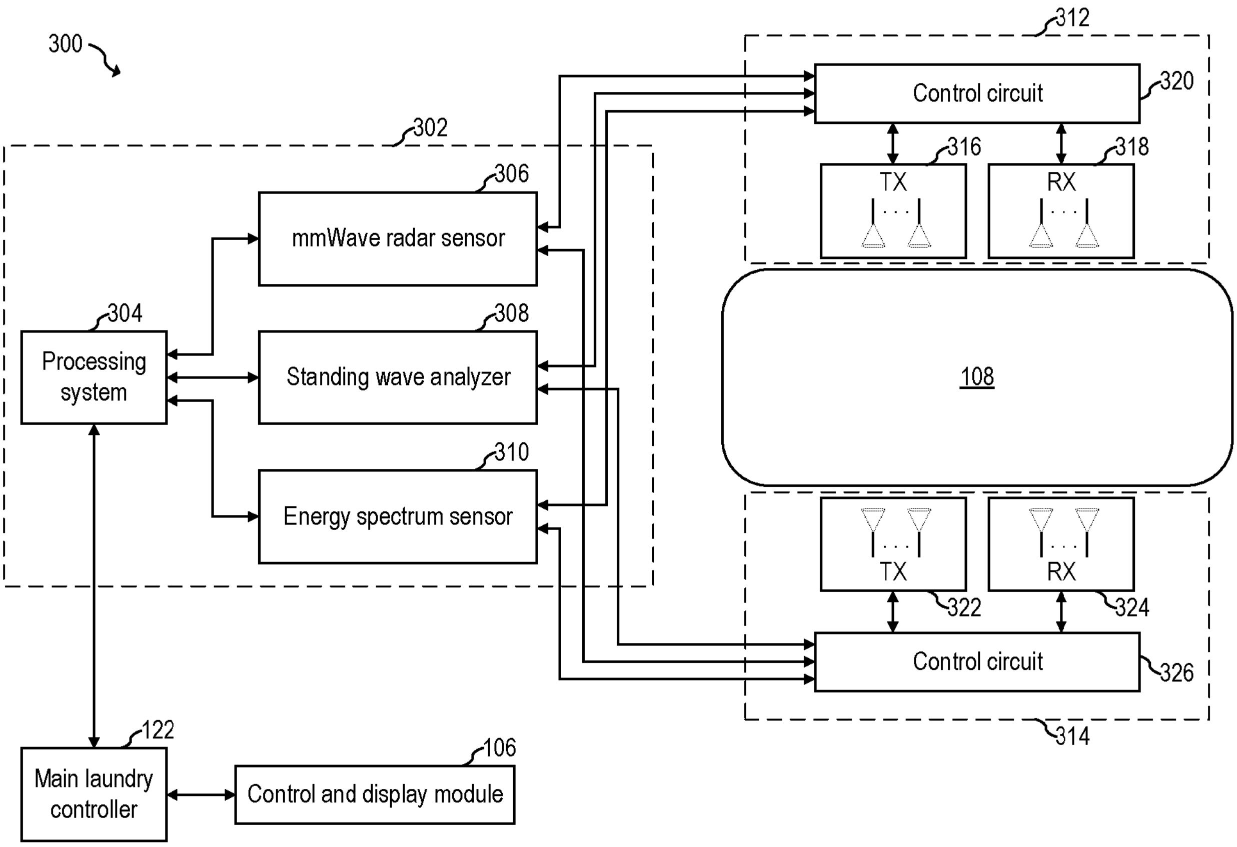
300
302
304
Processing system
306
mmWave radar sensor
308
Standing wave analyzer
310
Energy spectrum sensor
312
Control circuit
320
316
TX
318
RX
108
TX
RX
322
324
Control circuit
326
314
122
Main laundry controller
106
Control and display module

FIG. 3

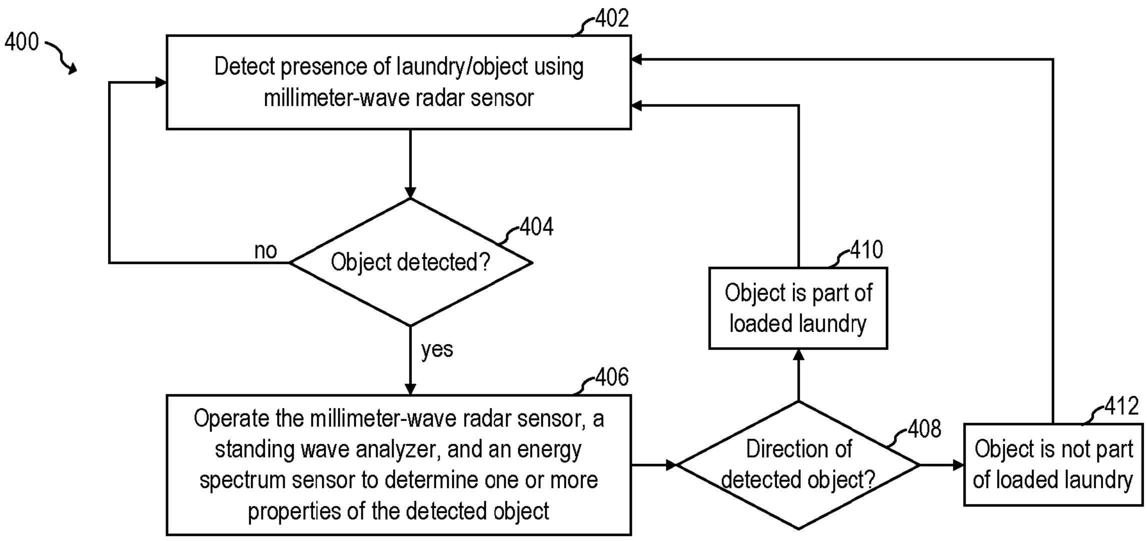
400
402
Detect presence of laundry/object using millimeter-wave radar sensor
404
Object detected?
no
yes
406
Operate the millimeter-wave radar sensor, a standing wave analyzer, and an energy spectrum sensor to determine one or more properties of the detected object
408
Direction of detected object?
410
Object is part of loaded laundry
412
Object is not part of loaded laundry

FIG. 4

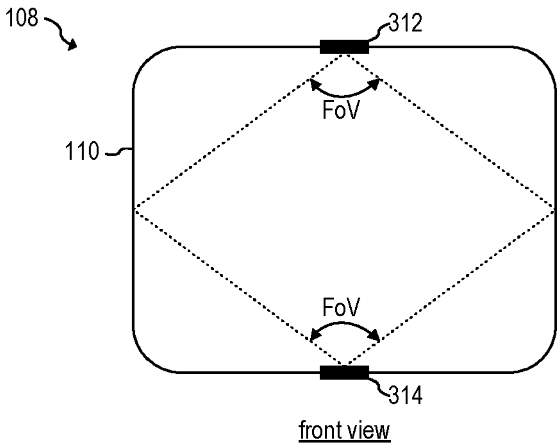
108
312
FoV
110
FoV
314
front view

FIG. 5

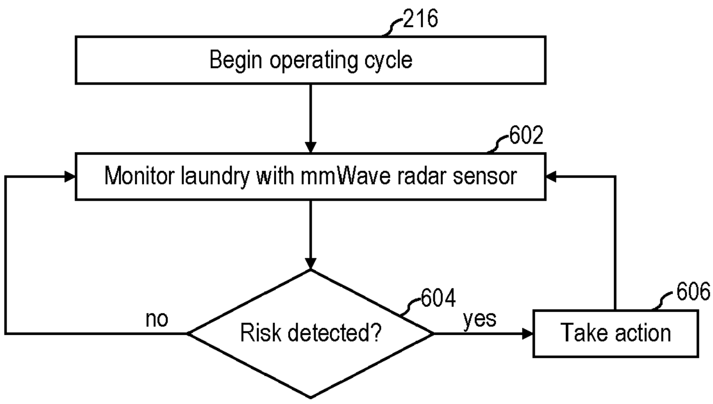
216
Begin operating cycle
602
Monitor laundry with mmWave radar sensor
604
no
Risk detected?
yes
606
Take action

FIG. 6

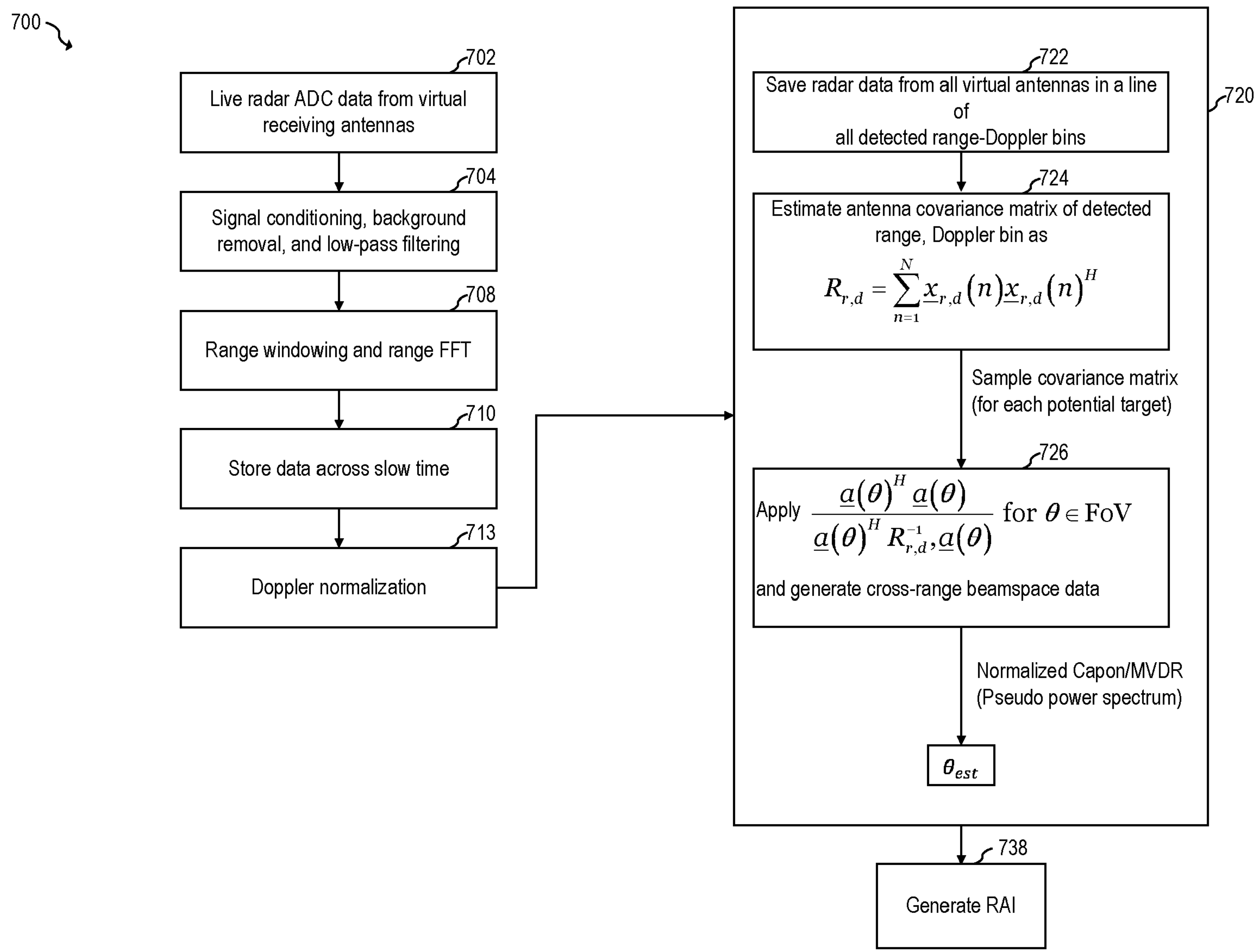
700
702
Live radar ADC data from virtual receiving antennas
704
Signal conditioning, background removal, and low-pass filtering
708
Range windowing and range FFT
710
Store data across slow time
713
Doppler normalization
720
722
Save radar data from all virtual antennas in a line of all detected range-Doppler bins
724
Estimate antenna covariance matrix of detected range, Doppler bin as
$R_{r,d} = \sum_{n=1}^{N} \underline{x}_{r,d}(n)\underline{x}_{r,d}(n)^H$
Sample covariance matrix (for each potential target)
726
Apply $\frac{\underline{a}(\theta)^H \underline{a}(\theta)}{\underline{a}(\theta)^H R_{r,d}^{-1} \underline{a}(\theta)}$ for $\theta \in \mathrm{FoV}$
and generate cross-range beamspace data
Normalized Capon/MVDR (Pseudo power spectrum)
$\theta_{est}$
738
Generate RAI

FIG. 7

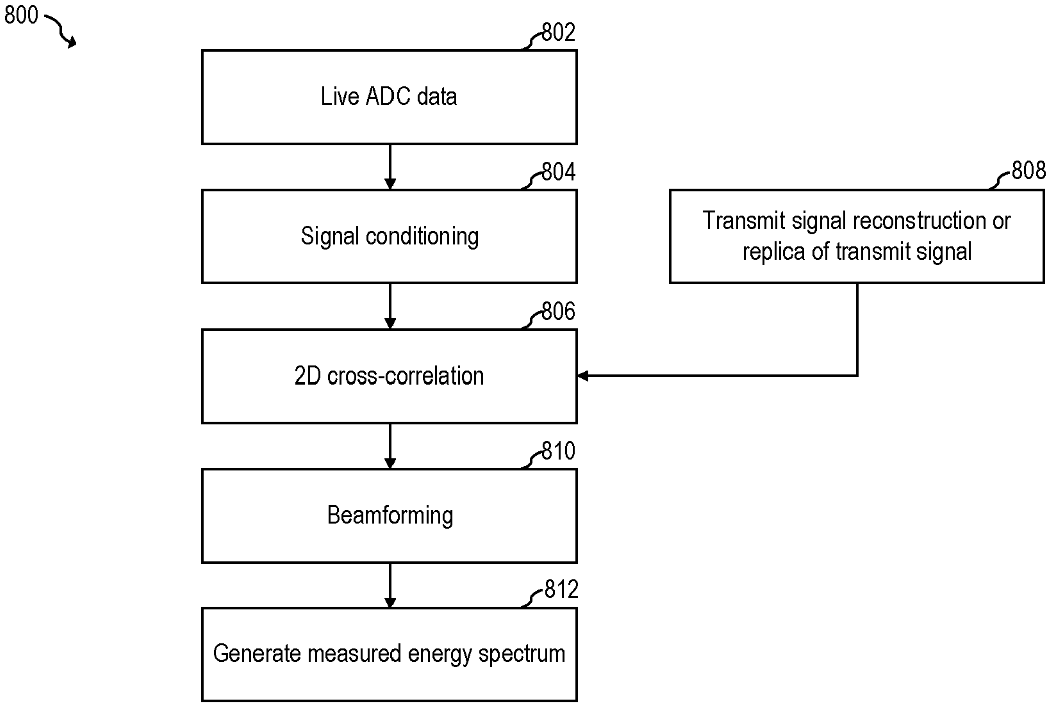
800
802
Live ADC data
804
Signal conditioning
808
Transmit signal reconstruction or replica of transmit signal
806
2D cross-correlation
810
Beamforming
812
Generate measured energy spectrum

**FIG. 8**

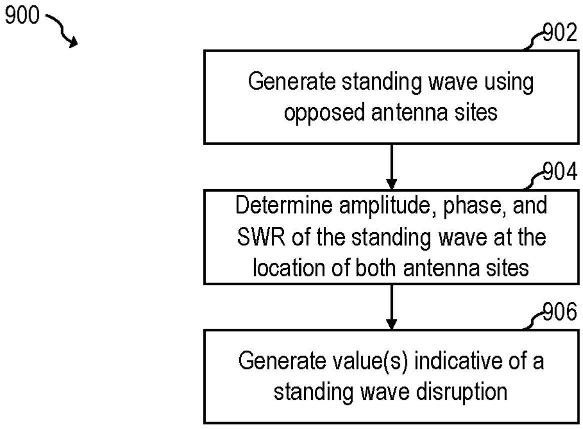
900
902
Generate standing wave using opposed antenna sites
904
Determine amplitude, phase, and SWR of the standing wave at the location of both antenna sites
906
Generate value(s) indicative of a standing wave disruption

**FIG. 9**

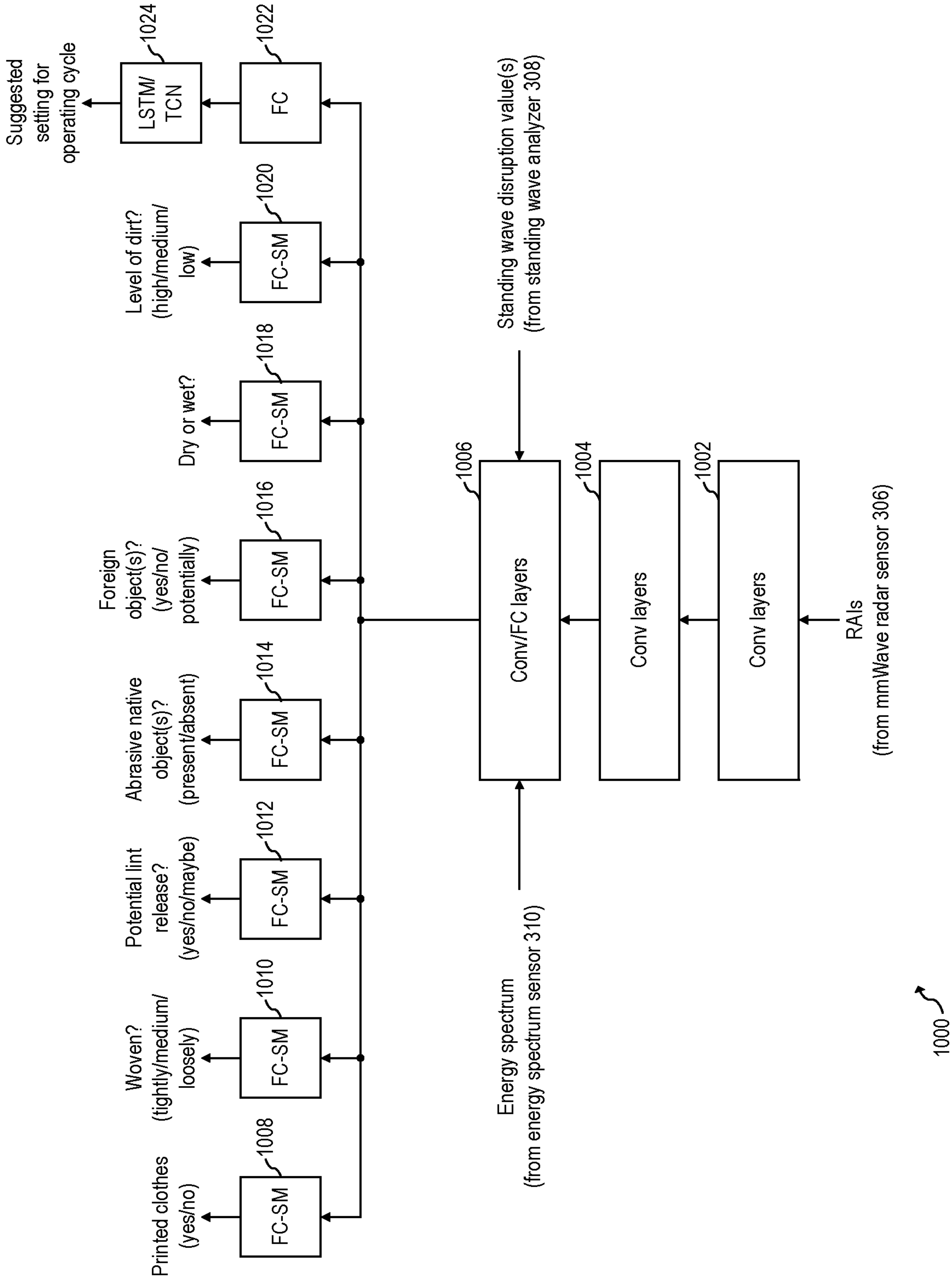
RAIs
(from mmWave radar sensor 306)
Conv layers
1002
Conv layers
1004
Conv/FC layers
1006
Standing wave disruption value(s)
(from standing wave analyzer 308)
Energy spectrum
(from energy spectrum sensor 310)
FC-SM
1008
Printed clothes
(yes/no)
FC-SM
1010
Woven?
(tightly/medium/
loosely)
FC-SM
1012
Potential lint
release?
(yes/no/maybe)
FC-SM
1014
Abrasive native
object(s)?
(present/absent)
FC-SM
1016
Foreign
object(s)?
(yes/no/
potentially)
FC-SM
1018
Dry or wet?
FC-SM
1020
Level of dirt?
(high/medium/
low)
FC
1022
LSTM/
TCN
1024
Suggested
setting for
operating cycle
1000

FIG. 10

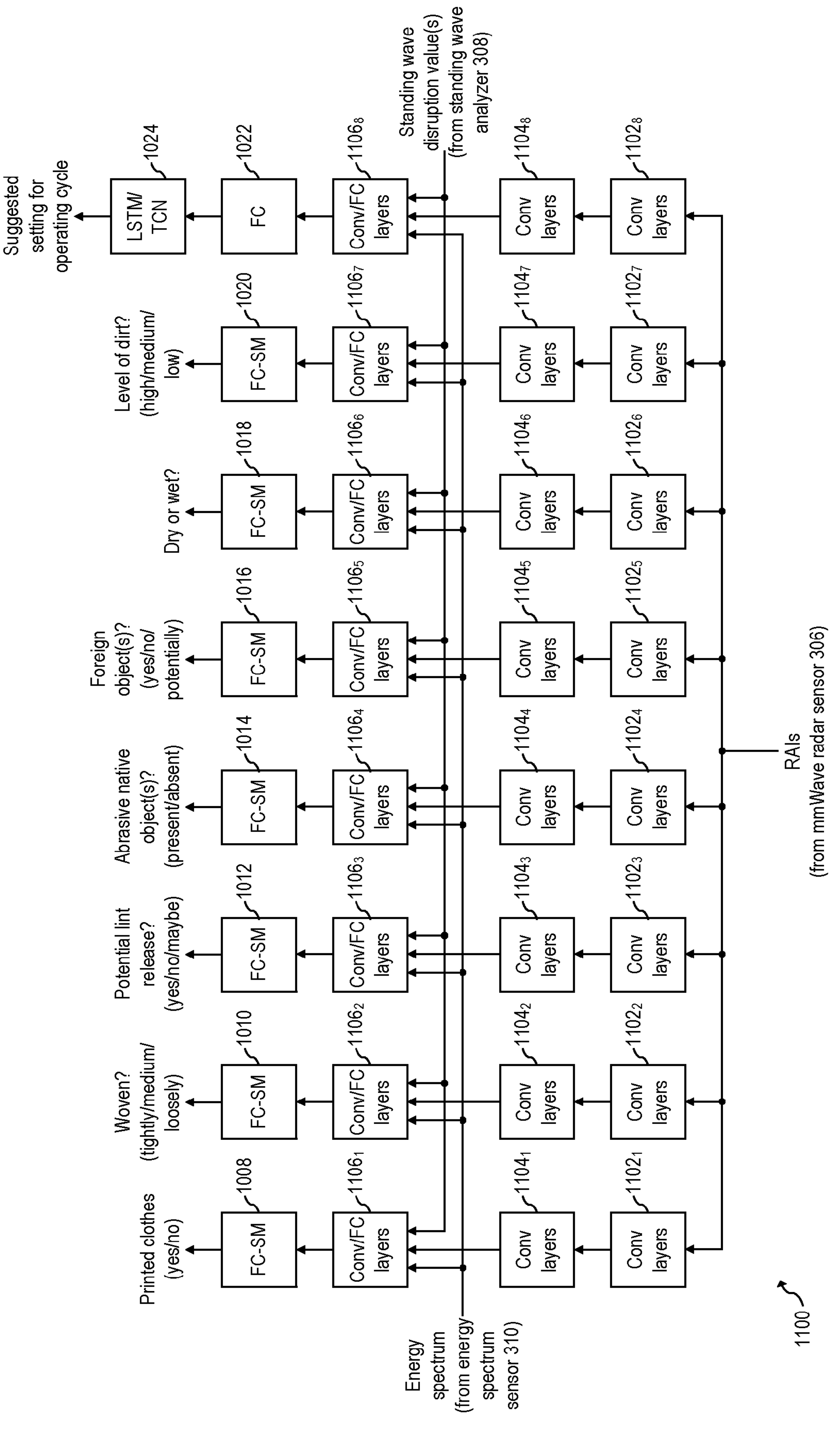
Suggested setting for operating cycle
LSTM/ TCN
1024
FC
1022
Level of dirt? (high/medium/ low)
FC-SM
1020
Dry or wet?
FC-SM
1018
Foreign object(s)? (yes/no/ potentially)
FC-SM
1016
Abrasive native object(s)? (present/absent)
FC-SM
1014
Potential lint release? (yes/no/maybe)
FC-SM
1012
Woven? (tightly/medium/ loosely)
FC-SM
1010
Printed clothes (yes/no)
FC-SM
1008
Conv/FC layers
$1106_1$
$1106_2$
$1106_3$
$1106_4$
$1106_5$
$1106_6$
$1106_7$
$1106_8$
Standing wave disruption value(s) (from standing wave analyzer 308)
Energy spectrum (from energy spectrum sensor 310)
Conv layers
$1104_1$
$1104_2$
$1104_3$
$1104_4$
$1104_5$
$1104_6$
$1104_7$
$1104_8$
$1102_1$
$1102_2$
$1102_3$
$1102_4$
$1102_5$
$1102_6$
$1102_7$
$1102_8$
RAIs (from mmWave radar sensor 306)
1100

FIG. 11

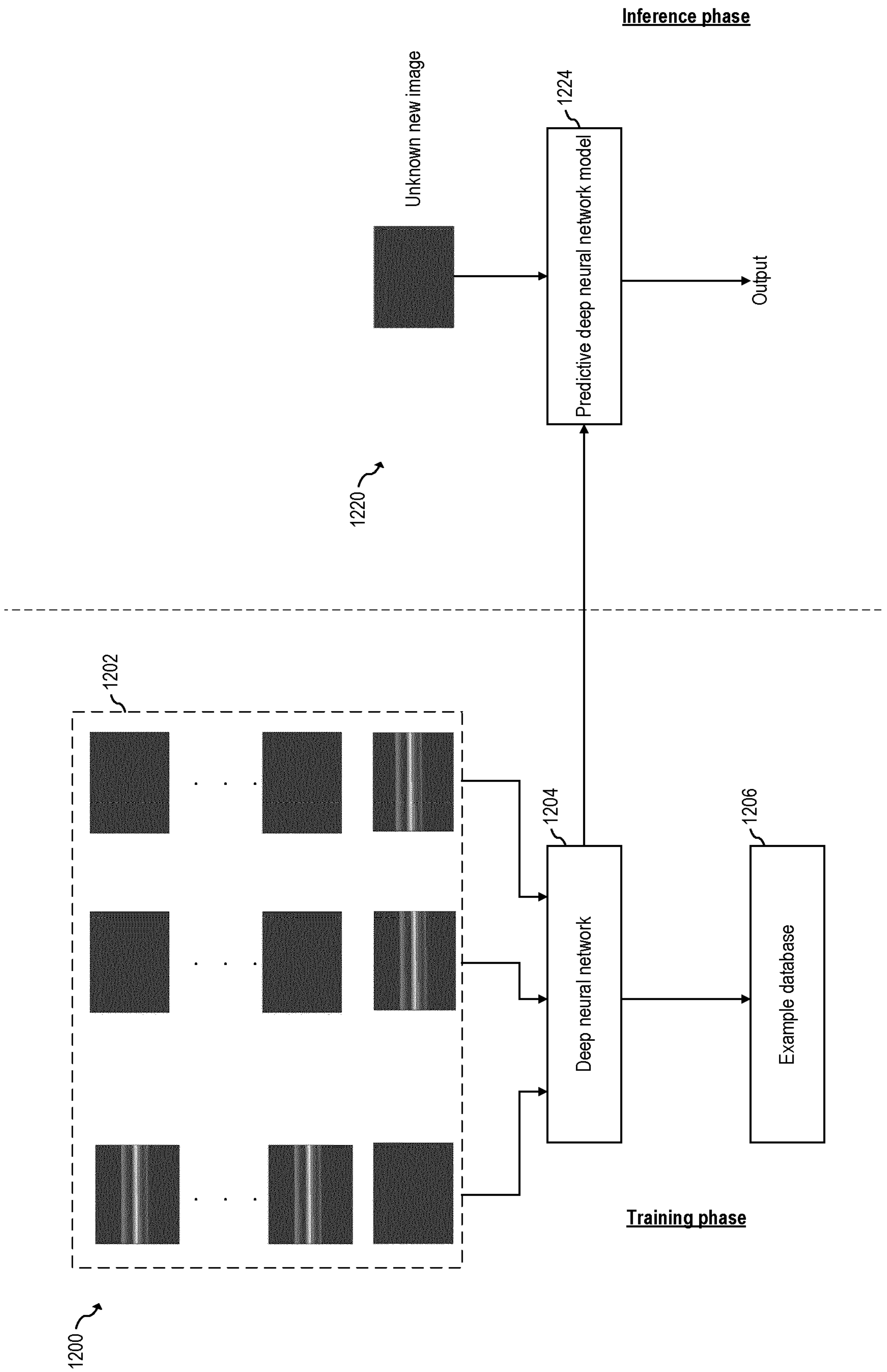
Inference phase
Unknown new image
1224
Predictive deep neural network model
Output
1220
1202
1204
Deep neural network
1206
Example database
Training phase
1200

FIG. 12

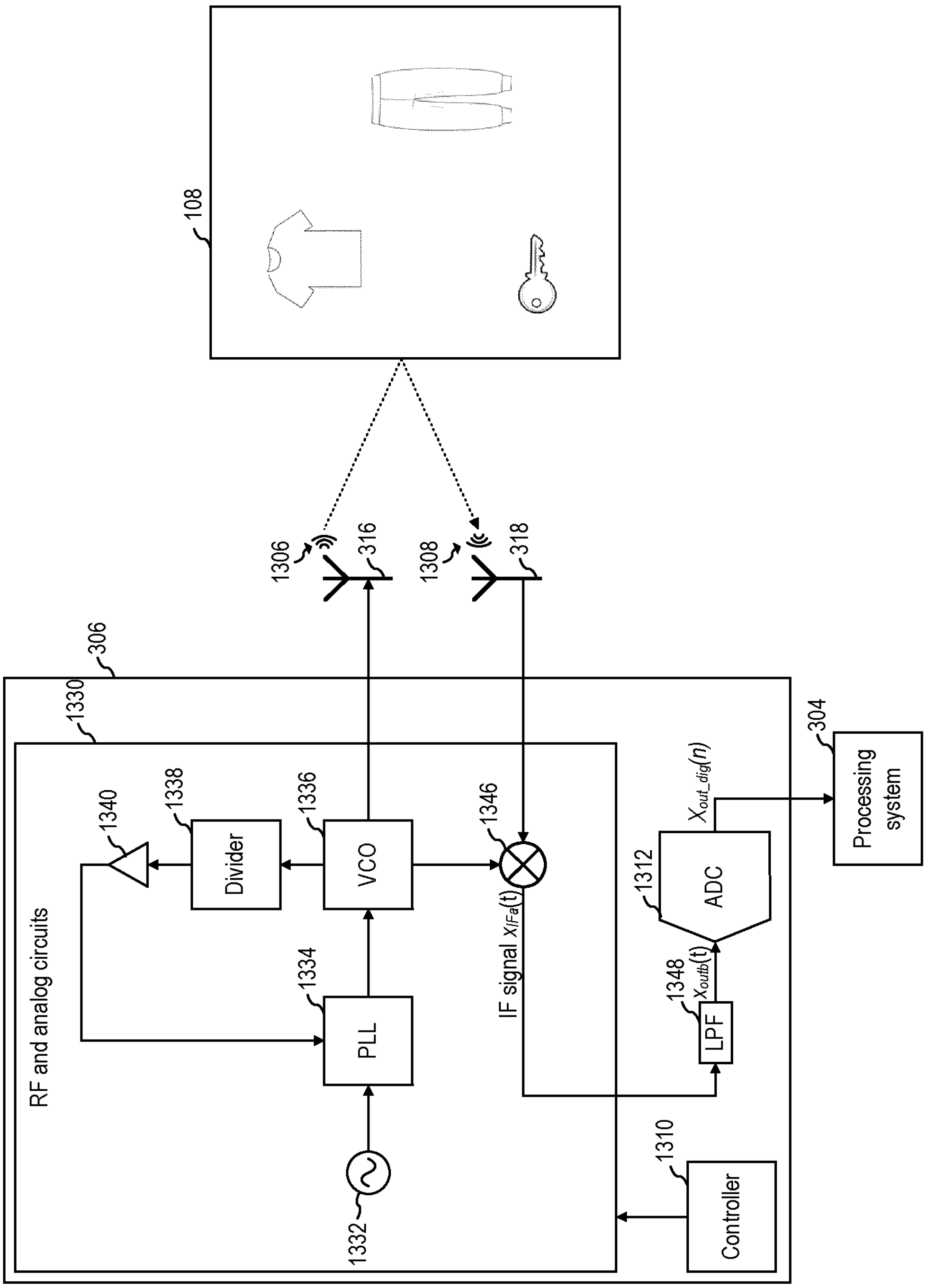
108
1306
316
1308
318
306
1330
RF and analog circuits
1340
1338
Divider
1336
VCO
1346
1334
PLL
1332
IF signal $x_{IFa}(t)$
1348
$x_{outb}(t)$
LPF
1312
ADC
$X_{out_dig}(n)$
304
Processing system
1310
Controller

FIG. 13

Europäisches Patentamt
European Patent Office
Office européen des brevets

# EUROPEAN SEARCH REPORT

Application Number
EP 23 16 7292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 134 673 A (QINGDAO HAIER DRUM WASHING MACHINE LTD COMPANY ET AL.) 4 March 2022 (2022-03-04) * claim 3; figure 1 * ----- | 1-15 | INV. D06F34/04 D06F34/20 D06F33/47 |
| A | US 2019/169780 A1 (CHEN XIN [US] ET AL) 6 June 2019 (2019-06-06) * paragraph [0016] - paragraph [0018]; figure 1 * ----- | 1-15 | ADD. D06F103/02 D06F103/06 D06F58/50 D06F34/05 D06F34/14 D06F34/18 |
| A,P | WO 2023/036002 A1 (QINGDAO HAIER LAUNDRY ELECTRIC APPLIANCES CO LTD [CN] ET AL.) 16 March 2023 (2023-03-16) * paragraph [0085] - paragraph [0114]; figure 11 * ----- | 1-15 | |

TECHNICAL FIELDS SEARCHED (IPC)

D06F

The present search report has been drawn up for all claims

1

| Place of search | Date of completion of the search | Examiner |
|---|---|---|
| Munich | 5 September 2023 | Diaz y Diaz-Caneja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 16 7292

This annex lists the patent family members relating to the patent documents cited in the above-mentioned European search report. The members are as contained in the European Patent Office EDP file on
The European Patent Office is in no way liable for these particulars which are merely given for the purpose of information.

05-09-2023

| Patent document cited in search report | | Publication date | Patent family member(s) | | | Publication date |
|---|---|---|---|---|---|---|
| CN 114134673 | A | 04-03-2022 | NONE | | | |
| US 2019169780 | A1 | 06-06-2019 | CN | 111684119 | A | 18-09-2020 |
| | | | EP | 3682049 | A1 | 22-07-2020 |
| | | | US | 2019169780 | A1 | 06-06-2019 |
| | | | WO | 2019109785 | A1 | 13-06-2019 |
| WO 2023036002 | A1 | 16-03-2023 | CN | 115772774 | A | 10-03-2023 |
| | | | WO | 2023036002 | A1 | 16-03-2023 |

EPO FORM P0459

For more details about this annex : see Official Journal of the European Patent Office, No. 12/82